# EUROPEAN PATENT SPECIFICATION

(11) **EP 3 057 353 B1**
(45) Date of publication and mention of the grant of the patent: **14.02.2018**
(21) Application number: 13896800.3
(22) Date of filing: 31.10.2013
(51) Int. Cl.: H04L 12/911, H04L 12/24, H04W 16/10, H04W 16/04

(54) **FREQUENCY SPECTRUM ALLOCATION METHOD AND DEVICE**
VERFAHREN UND VORRICHTUNG FÜR DIE ZUWEISUNG VON FREQUENZSPEKTREN
PROCÉDÉ ET DISPOSITIF D'ATTRIBUTION DE SPECTRE DE FRÉQUENCES

(43) Date of publication of application: 17.08.2016
(73) Proprietor: Huawei Technologies Co., Ltd., Longgang District Shenzhen, Guangdong 518129 (CN)
(72) Inventor: WANG, Xiong, Shenzhen Guangdong 518129 (CN); LIU, Hong, Shenzhen Guangdong 518129 (CN); LIU, Ning, Shenzhen Guangdong 518129 (CN)
(74) Representative: Epping - Hermann - Fischer
(86) International application number: PCT/CN2013/086379
(87) International publication number: WO 2015/062058

(56) References cited:
- EP-A1- 2 490 348
- WO-A2-2012/126435
- CN-A- 102 546 435
- CN-A- 102 893 963
- CN-U- 201 947 445
- US-A1- 2009 008 203
- US-A1- 2012 070 150

## Description

### TECHNICAL FIELD

The present invention relates to the field of communications application technologies, and in particular, to a spectrum allocation method and device.

### BACKGROUND

At present, in terms of improving transmission performance of a transmission network, bandwidth having a same granularity is allocated to each data service by using a conventional dense wavelength division multiplexing technology DWDM (Dense Wavelength Division Multiplexing). However, when a service data baud rate is low (that is, a service bandwidth is relatively small), a waste of bandwidth resources is caused; when a service data baud rate is high (that is, a service bandwidth is relatively large), a service failure is caused by a shortage of allocated bandwidth resources, which therefore increases a blocking rate of a network.

Therefore, in order to improve network bandwidth utilization, the industry puts forward a flexible bandwidth optical network FBON (Flexible bandwidth optical network). The FBON may allocate a required bandwidth resource to a service according to a baud rate of the service, so as to improve network bandwidth resource utilization. Because bandwidth allocation of the FBON is performed according to a bandwidth actually needed by service data, in an allocation process, a bandwidth fragment that cannot be used is formed. The bandwidth fragment is generated mainly because after bandwidth allocation is performed, a remaining bandwidth is less than a bandwidth needed by a smallest service and cannot be allocated to any type of service for use, and therefore, the remaining bandwidth becomes a bandwidth fragment.

When the network bandwidth resource utilization is improved by using the FBON in the prior art, an unused spectrum band is arranged for a newly added service according to a spectrum band occupied by data of an existing service, which however increases bandwidth fragments in the network. Because of the increase in bandwidth fragments, a blocking rate of channel transmission is increased, which therefore reduces network resource utilization.

Document CN 201 947 445 U discloses a dynamic spectrum allocation system based on the time particle size, which comprises an operator base station, a coupling matrix module, a dynamic spectrum management module, a cognition database module, a cognition base station and a non-authorized user terminal. During the process of sharing spectrum, inspired by economic benefit, the authorized user can obtain the maximum benefit by sharing the spectrum without affecting the communication quality per se and can hereby actively participate in the spectrum sharing, and the non-authorized user can effectively alleviate the spectrum resource shortage situation by sharing the spectrum.

Document CN 102 546 435 A discloses a spectrum resource assignment method, which comprises the following steps: classifying a network service, correspondingly blocking a spectrum space, determining corresponding relationships between network service classes and spectrum blocks, and when spectrum resources are required to be assigned to the network service, determining the network service class of the network service; determining a spectrum block corresponding to the network service class according to the corresponding relationships between the network service classes and the spectrum blocks; and assigning spectrum resources in the spectrum block to the network service.

Document WO 2012/126435 A2 discloses a method for allocating bandwidth resources, said method comprises: obtaining the current service, identifying the type of the current service, allocating the current service to the necessary bandwidth within the bandwidth group of the idle broadband not occupied by service of other service types, said other service types being defined as service types different to the type of current service, wherein every bandwidth group is allocated service of the same type and the bandwidth resources include n bandwidth groups having identical bandwidth, said bandwidth of the bandwidth groups being the least common multiple of the necessary bandwidth of the service types needing to be processed.

Document EP 2 490 348 A1 discloses a method and an apparatus for allocating a cognitive radio network spectrum based on aggregation. The method includes: obtaining information about unoccupied spectrum fragments and unit capacity information of a secondary users on different spectrum fragments, and constructing a solution matrix; calculating a reference index corresponding to the solution matrix, determining a resource allocation vector according to the reference index, and allocating resources after selecting a resource allocation element from the resource allocation vector; and if there is a remaining resource allocation element waiting for resource allocation after the resource allocation, removing a resource allocation element that is used in the resource allocation from the solution matrix, and then constructing a new solution matrix to continue allocating resources until unoccupied spectrum resources corresponding to the information about unoccupied spectrum fragments are allocated completely or all secondary users waiting for resource allocation obtain required spectrum resources.

Document US 2012/070150 A1 discloses a method, implemented in an optical flexible wavelength division multiplexing FWDM network, including finding a connection route in an optical FWDM network on which a channel with sufficient spectrum is available at lowest wavelength among all available channels, finding K channels at first available K lower wavelengths out of available channels for minimizing total required spectrum; and selecting a channel which is routed through minimum number of optical fiber paths out of the K available channels at one of the lower wavelengths.

### SUMMARY

Embodiments of the present invention provide a spectrum allocation method and device, which resolve a problem that a spectrum resource is not fully used due to bandwidth fragments.

In order to achieve the foregoing objective, the following technical solutions are used in the embodiments of the present invention.

According to a first aspect, a spectrum allocation device is provided, including:
an allocation unit, configured to allocate a corresponding continuous available spectrum resource to a newly added service of service type i of k possible service types, each possible service type occupying a predefined spectrum width s(i), 1≤i≤k, according to a pre-classified spectrum resource, where the pre-classified spectrum resource includes: a spectrum band *M* in a first state, a spectrum band *M'* in a second state, and a spectrum band *N* in a third state, wherein the spectrum band *M* in a first state is a spectrum band in an occupied state, and at least one link in the spectrum band in an occupied state is in an occupied state, the spectrum band *M'* in a second state is a spectrum band in a released state, wherein the spectrum band in a released state is a spectrum band comprising spectrum resources that are released by all services in the spectrum band *M* in a first state, and the spectrum band *N* in a third state is a spectrum band *N* in an unused state, and wherein, if a continuous available spectrum resource having a bandwidth corresponding to the predefined bandwidth of the newly added service of type i exists in the spectrum band *M* in the first state or in the spectrum band *M'* in the second state, the allocation unit (11) allocates a continuous available spectrum resource to the newly added service according to the spectrum band *M* in the first state or according to the spectrum band *M'* in a second state in the pre-classified spectrum resource, respectively; and
an update unit, configured to update status information of the spectrum resource that is occupied by the newly added service and that is allocated by the allocation unit.

With reference to the first aspect, in a first possible implementation manner, the allocation unit is specifically configured to:
when the spectrum resource is allocated to the newly added service, if the service type of the newly added service is the same as a service type of the spectrum band *M* in a first state, preferentially allocate the spectrum band *M* in a first state of the same service type to the newly added service; and
if a link including a continuous available spectrum resource exists in the spectrum band *M* in a first state in the pre-classified spectrum resource, allocate a spectrum resource in the spectrum band *M* in a first state to the newly added service;

With reference to the first implementation manner of the first aspect, in a second possible implementation manner, the allocation unit is specifically further configured to: if a continuous available resource whose service type is the same as the service type of the newly added service does not exist in the spectrum band *M* in a first state in the pre-classified spectrum resource, check whether a continuous available spectrum resource exists in the spectrum band *M'* in a second state in the pre-classified spectrum resource; and
if a continuous available spectrum resource whose service type is the same as the service type of the newly added service exists in the spectrum band *M'* in a second state, allocate a spectrum resource to the newly added service;

With reference to the second implementation manner of the first aspect, in a third possible implementation manner, the allocation unit is specifically further configured to: if a continuous available spectrum resource whose service type is the same as the service type of the newly added service does not exist in the spectrum band *M'* in a second state, check whether a continuous available spectrum resource exists in the spectrum band *N* in a third state in the pre-classified spectrum resource; and
if a continuous available spectrum resource whose service type is the same as the service type of the newly added service exists in the spectrum band *N* in a third state, allocate a spectrum resource to the newly added service.

With reference to the first aspect, in a fourth possible implementation manner, the allocation unit is specifically further configured to:
when the newly added service is received, preferentially allocate a continuous available spectrum resource to the newly added service according to the spectrum band *M'* in a second state in the pre-classified spectrum resource; and
when the spectrum band *M'* in a second state cannot meet the newly added service, search, according to the pre-classified spectrum resource, the spectrum band *M* in a first state and/or the spectrum band *N* in a third state for a continuous available spectrum resource, and allocate the continuous available spectrum resource to the newly added service.

With reference to the first aspect, in a fifth possible implementation manner, the update unit is specifically configured to:
update a current state of the spectrum band *M* in a first state after the newly added service is released in the pre-classified spectrum resource, and update a state of the spectrum band *M'* in a second state according to a spectrum resource obtained after the newly added service is released.

With reference to the fifth possible implementation manner of the first aspect, in a sixth possible implementation manner, the update unit is specifically further configured to:
when a service on the spectrum band *M'* in a second state releases all spectrum resources, update, to the spectrum band *N* in a third state, the spectrum resources released in the spectrum band *M'* in a second state;
   or
when a service on the spectrum band *M'* in a second state releases all spectrum resources, keep a state of the spectrum band *N* in a third state unchanged.

According to a second aspect, a spectrum allocation method is provided, including:
allocating a corresponding continuous available spectrum resource to a newly added service of service type i of k possible service types, each possible service type occupying a predefined spectrum width s(i), 1≤i≤k, according to a pre-classified spectrum resource, where the pre-classified spectrum resource includes: a spectrum band *M* in a first state, a spectrum band *M'* in a second state, and a spectrum band *N* in a third state, wherein the spectrum band *M* in a first state is a spectrum band in an occupied state, and at least one link in the spectrum band in an occupied state is in an occupied state, the spectrum band *M'* in a second state is a spectrum band in a released state, wherein the spectrum band in a released state is a spectrum band comprising spectrum resources that are released by all services in the spectrum band *M* in a first state, and the spectrum band *N* in a third state is a spectrum band *N* in an unused state, and wherein, if a continuous available spectrum resource having a bandwidth corresponding to the predefined bandwidth of the newly added service of type i exists in the spectrum band *M* in the first state or in the spectrum band *M'* in the second state, a continuous available spectrum resource according to the spectrum band *M* in the first state or according to the spectrum band *M'* in a second state in the pre-classified spectrum resource is allocated to the newly added service; and
updating status information of the spectrum resource occupied by the newly added service.

With reference to the second aspect, in a first possible implementation manner, the allocating a corresponding continuous available spectrum resource to a newly added service of service type i of k possible service types according to a pre-classified spectrum resource includes
when the spectrum resource is allocated to the newly added service, if the service type of the newly added service is the same as a service type of the spectrum band *M* in a first state, preferentially allocating the spectrum band *M* in a first state of the same service type to the newly added service; and
if a link including a continuous available spectrum resource exists in the spectrum band *M* in a first state in the pre-classified spectrum resource, allocating a spectrum resource in the spectrum band *M* in a first state to the newly added service;

With reference to the first implementation manner of the second aspect, in a second possible implementation manner, the allocating a corresponding continuous available spectrum resource to a newly added service of service type i of k possible service types according to a pre-classified spectrum resource further comprises:
if a continuous available resource whose service type is the same as the service type of the newly added service does not exist in the spectrum band *M* in a first state in the pre-classified spectrum resource, checking whether a continuous available spectrum resource exists in the spectrum band *M'* in a second state in the pre-classified spectrum resource; and
if a continuous available spectrum resource whose service type is the same as the service type of the newly added service exists in the spectrum band *M'* in a second state, allocating a spectrum resource to the newly added service;

With reference to the second implementation manner of the second aspect, in a third possible implementation manner, the allocating a corresponding continuous available spectrum resource to a newly added service of service type i of k possible service types according to a pre-classified spectrum resource further comprises:
if a continuous available spectrum resource whose service type is the same as the service type of the newly added service does not exist in the spectrum band *M'* in a second state, checking whether a continuous available spectrum resource exists in the spectrum band *N* in a third state in the pre-classified spectrum resource; and
if a continuous available spectrum resource whose service type is the same as the service type of the newly added service exists in the spectrum band *N* in a third state, allocating a spectrum resource to the newly added service.

With reference to the second aspect, in a fourth possible implementation manner, the allocating a corresponding continuous available spectrum resource to a newly added service according to a pre-classified spectrum resource includes:
when the newly added service is received, preferentially allocating a continuous available spectrum resource to the newly added service according to the spectrum band *M'* in a second state in the pre-classified spectrum resource; and
when the spectrum band *M'* in a second state cannot meet the newly added service, searching, according to the pre-classified spectrum resource, the spectrum band *M* in a first state and/or the spectrum band *N* in a third state for a continuous available spectrum resource, and allocating the continuous available spectrum resource to the newly added service.

With reference to the second aspect, in a fifth possible implementation manner, the updating status information of the spectrum resource occupied by the newly added service includes:
updating a current state of the spectrum band *M* in a first state after the newly added service is released in the pre-classified spectrum resource, and updating a state of the spectrum band *M'* in a second state according to a spectrum resource obtained after the newly added service is released.

With reference to the fifth possible implementation manner of the second aspect, in a sixth possible implementation manner, the updating a current state of the spectrum band *M* in a first state after the newly added service is released in the pre-classified spectrum resource, and updating a state of the spectrum band *M'* in a second state according to a spectrum resource obtained after the newly added service is released includes:
when a service on the spectrum band *M'* in a second state releases all spectrum resources, updating, to the spectrum band *N* in a third state, the spectrum resources released in the spectrum band *M'* in a second state;
   or
when a service on the spectrum band *M'* in a second state releases all spectrum resources, keeping a state of the spectrum band *N* in a third state unchanged.

According to the spectrum allocation method and device provided in the embodiments of the present invention, when a newly added service is received, a continuous available spectrum resource is allocated to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; in this way, a problem that a spectrum resource is not fully used due to bandwidth fragments is resolved, and therefore, network resource utilization is improved.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a spectrum allocation device according to an embodiment of the present invention;
FIG. 2 is a schematic structural diagram of a spectrum allocation device according to another embodiment of the present invention;
FIG. 3 is a schematic flowchart of a spectrum allocation method according to an embodiment of the present invention;
FIG. 4 is a schematic flowchart of another spectrum allocation method according to an embodiment of the present invention;
FIG. 5 is a schematic structural diagram of a network topology according to an embodiment of the present invention;
FIG. 6 is a schematic structural diagram of spectrum allocation according to an embodiment of the present invention;
FIG. 7 is a schematic structural diagram of another spectrum allocation according to an embodiment of the present invention;
FIG. 8 is a schematic structural diagram of a spectrum allocation according to another embodiment of the present invention;
FIG. 9 is a schematic structural diagram of another spectrum allocation according to another embodiment of the present invention;
FIG. 10 is a schematic structural diagram of still another spectrum allocation according to another embodiment of the present invention;
FIG. 11 is a schematic structural diagram of a spectrum allocation according to still another embodiment of the present invention;
FIG. 12 is a schematic structural diagram of another spectrum allocation according to still another embodiment of the present invention;
FIG. 13 is a schematic structural diagram of a spectrum allocation according to yet another embodiment of the present invention;
FIG. 14 is a schematic flowchart of still another spectrum allocation method according to an embodiment of the present invention; and
FIG. 15 is a schematic flowchart of yet another spectrum allocation method according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely some rather than all of the embodiments of the present invention. All other embodiments obtained by a person of ordinary skill in the art based on the embodiments of the present invention without creative efforts shall fall within the protection scope of the present invention.

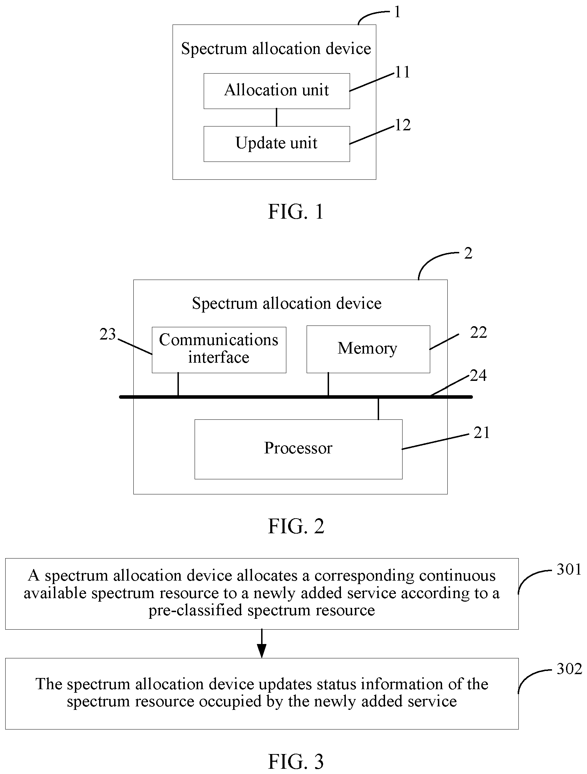

An embodiment of the present invention provides a spectrum allocation device 1, and referring to FIG. 1, the spectrum allocation device 1 includes:
an allocation unit 11, configured to allocate a corresponding continuous available spectrum resource to a newly added service according to a pre-classified spectrum resource, where the pre-classified spectrum resource includes: a spectrum band *M* in a first state, a spectrum band *M'* in a second state, and a spectrum band *N* in a third state; and
an update unit 12, configured to update status information of the spectrum resource that is occupied by the newly added service and that is allocated by the allocation unit. When a newly added service is received, the spectrum allocation device provided in this embodiment of the present invention allocates a continuous available spectrum resource to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; in this way, a problem that a spectrum resource is not fully used due to bandwidth fragments is resolved, and therefore, network resource utilization is improved.

Further, the spectrum band *M* in a first state is a spectrum band in an occupied state, and at least one link in the spectrum band in an occupied state is in an occupied state.

The spectrum band *M'* in a second state is a spectrum band in a released state, where the spectrum band in a released state is a spectrum band including spectrum resources that are released by all services in the spectrum band *M* in a first state.

The spectrum band *N* in a third state is a spectrum band *N* in an unused state.

Optionally, the allocation unit 11 is specifically configured to:
when the spectrum resource is allocated to the newly added service, if a service type of the newly added service is the same as a service type of the spectrum band *M* in a first state, preferentially allocate the spectrum band *M* that selects and uses the same service type to the newly added service; and
if a link including a continuous available spectrum resource exists in the spectrum band *M* in a first state in the pre-classified spectrum resource, allocate a spectrum resource in the spectrum band *M* in a first state to the newly added type of service;
   or
if a continuous available resource whose service type is the same as the service type of the newly added service does not exist in the spectrum band *M* in a first state in the pre-classified spectrum resource, check whether a continuous available spectrum resource exists in the spectrum band *M'* in a second state in the pre-classified spectrum resource; and
if a continuous available spectrum resource whose service type is the same as the service type of the newly added service exists in the spectrum band *M'* in a second state, allocate a spectrum resource to the newly added type of service;
   or
if a continuous available spectrum resource whose service type is the same as the service type of the newly added service does not exist in the spectrum band *M'* in a second state, check whether a continuous available spectrum resource exists in the spectrum band *N* in a third state in the pre-classified spectrum resource; and
if a continuous available spectrum resource whose service type is the same as the service type of the newly added service exists in the spectrum band *N* in a third state, allocate a spectrum resource to the newly added type of service.

Optionally, the allocation unit 11 is specifically further configured to:
when the newly added service is received, preferentially allocate a continuous available spectrum resource to the newly added service according to the spectrum band *M'* in a second state in the pre-classified spectrum resource; and
when the spectrum band *M'* in a second state cannot meet the newly added service, search, according to the pre-classified spectrum resource, the spectrum band *M* in a first state and/or the spectrum band *N* in a third state for a continuous available spectrum resource, and allocate the continuous available spectrum resource to the newly added service.

Optionally, the allocation unit 11 is specifically further configured to:
when the newly added service is received, preferentially allocate the spectrum band *N* in a third state in the pre-classified spectrum resource to the newly added service; and
when the spectrum band *N* in a third state cannot meet the newly added service, search, according to the pre-classified spectrum resource, the spectrum band *M* in a first state and/or the spectrum band *M'* in a second state for a continuous available spectrum resource, and allocate the continuous available spectrum resource to the newly added service.

Optionally, the update unit 12 is specifically configured to:
update a current state of the spectrum band *M* in a first state after the newly added service is released in the pre-classified spectrum resource, and update a state of the spectrum band *M'* in a second state according to a spectrum resource obtained after the newly added service is released.

Further, optionally, the update unit 12 is specifically further configured to:
when a service on the spectrum band *M'* in a second state releases all spectrum resources, update, to the spectrum band *N* in a third state, the spectrum resources released in the spectrum band *M'* in a second state;
   or
when a service on the spectrum band *M'* in a second state releases all spectrum resources, keep a state of the spectrum band *N* in a third state unchanged.

When a newly added service is received, the spectrum allocation device provided in this embodiment of the present invention allocates a continuous available spectrum resource to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; spectrum resources in the three states are layered according to the classification of the spectrum resources, so that only one type of service exists at a same layer, and therefore, different types of services are located at different spectrum resource layers; in this way, a problem that a spectrum resource is not fully used due to bandwidth fragments is resolved, and therefore, network resource utilization is improved.

An embodiment of the present invention provides a spectrum allocation device 2. Referring to FIG. 2, the spectrum allocation device 2 includes: at least one processor 21, a memory 22, a communications interface 23, and a bus 24. The at least one processor 21, the memory 22, and the communications interface 23 are connected and communicate with each other by using the bus 24.

The bus 24 may be an industry standard architecture (ISA for short) bus, a peripheral component interconnect (PCI for short) bus, an extended industry standard architecture (EISA for short) bus, or the like. The bus 24 may be classified into an address bus, a data bus, a control bus, and the like. For ease of description, the bus in FIG. 2 is represented by using only one bold line, but it does not mean that there is only one bus or only one type of bus.

The memory 22 is configured to store executable program code, where the program code includes a computer operation instruction. The memory 22 may include a high speed RAM memory, and may also include a non-volatile memory, such as at least one magnetic disk storage. The processor 21 may be a central processing unit (CPU for short), or an application specific integrated circuit (ASIC for short), or is configured as one or more integrated circuits for implementing this embodiment of the present invention.

The communications interface 23 is mainly configured to implement communication between apparatuses in this embodiment.

The processor 21 is configured to allocate a corresponding continuous available spectrum resource to a newly added service according to a pre-classified spectrum resource stored in the memory 22, where the pre-classified spectrum resource includes: a spectrum band *M* in a first state, a spectrum band *M'* in a second state, and a spectrum band *N* in a third state; and
the processor 21 is further configured to update status information of the spectrum resource occupied by the newly added service.

When a newly added service is received, the spectrum allocation device provided in this embodiment of the present invention allocates a continuous available spectrum resource to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; in this way, a problem that a spectrum resource is not fully used due to bandwidth fragments is resolved, and therefore, network resource utilization is improved.

Further, the spectrum band *M* in a first state is a spectrum band in an occupied state, and at least one link in the spectrum band in an occupied state is in an occupied state.

The spectrum band *M'* in a second state is a spectrum band in a released state, where the spectrum band in a released state is a spectrum band including spectrum resources that are released by all services in the spectrum band *M* in a first state.

The spectrum band *N* in a third state is a spectrum band *N* in an unused state.

Optionally, the processor 21 is specifically configured to:
when the spectrum resource is allocated to the newly added service, if a service type of the newly added service is the same as a service type of the spectrum band *M* in a first state, preferentially allocate the spectrum band *M* in a first state that selects and uses the same service type to the newly added service; and
if a link including a continuous available spectrum resource exists in the spectrum band *M* in a first state in the pre-classified spectrum resource, allocate a spectrum resource in the spectrum band *M* in a first state to the newly added type of service;
   or
if a continuous available resource whose service type is the same as the service type of the newly added service does not exist in the spectrum band *M* in a first state in the pre-classified spectrum resource, check whether a continuous available spectrum resource exists in the spectrum band *M'* in a second state in the pre-classified spectrum resource; and
if a continuous available spectrum resource whose service type is the same as the service type of the newly added service exists in the spectrum band *M'* in a second state, allocate a spectrum resource to the newly added type of service;
   or
if a continuous available spectrum resource whose service type is the same as the service type of the newly added service does not exist in the spectrum band *M'* in a second state, check whether a continuous available spectrum resource exists in the spectrum band *N* in a third state in the pre-classified spectrum resource; and
if a continuous available spectrum resource whose service type is the same as the service type of the newly added service exists in the spectrum band *N* in a third state, allocate a spectrum resource to the newly added type of service.

Optionally, the processor 21 is specifically further configured to:
when the newly added service is received through the at least one communications interface 23, preferentially allocate a continuous available spectrum resource to the newly added service according to the spectrum band *M'* in a second state in the pre-classified spectrum resource; and
when the spectrum band *M'* in a second state cannot meet the newly added service, search, according to the pre-classified spectrum resource, the spectrum band *M* in a first state and/or the spectrum band *N* in a third state for a continuous available spectrum resource, and allocate the continuous available spectrum resource to the newly added service.

Optionally, the processor 21 is specifically further configured to:
when the newly added service is received through the at least one communications interface 23, preferentially allocate the spectrum band *N* in a third state in the pre-classified spectrum resource to the newly added service; and
when the spectrum band *N* in a third state cannot meet the newly added service, search, according to the pre-classified spectrum resource, the spectrum band *M* in a first state and/or the spectrum band *M'* in a second state for a continuous available spectrum resource, and allocate the continuous available spectrum resource to the newly added service.

Optionally, the processor 21 is specifically further configured to:
update a current state of the spectrum band *M* in a first state after the newly added service is released in the pre-classified spectrum resource, and update a state of the spectrum band *M'* in a second state according to a spectrum resource obtained after the newly added service is released.

Further, optionally, the processor 21 is specifically further configured to:
when a service on the spectrum band *M'* in a second state releases all spectrum resources, update, to the spectrum band *N* in a third state, the spectrum resources released in the spectrum band *M'* in a second state;
   or
when a service on the spectrum band *M'* in a second state releases all spectrum resources, keep a state of the spectrum band *N* in a third state unchanged.

When a newly added service is received, the spectrum allocation device provided in this embodiment of the present invention allocates a continuous available spectrum resource to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; spectrum resources in the three states are layered according to the classification of the spectrum resources, so that only one type of service exists at a same layer, and therefore, different types of services are located at different spectrum resource layers; in this way, a problem that a spectrum resource is not fully used due to bandwidth fragments is resolved, and therefore, network resource utilization is improved.

### Embodiment 1

This embodiment of the present invention provides a spectrum allocation method, which effectively reduces bandwidth fragments while lowering a blocking rate of a wireless mesh network, where the mesh network is developed from a point-to-point ad hoc network. This embodiment of the present invention provides a spectrum allocation method. Referring to FIG. 3, the spectrum allocation method specifically includes the following steps:
301: A spectrum allocation device allocates a corresponding continuous available spectrum resource to a newly added service according to a pre-classified spectrum resource.

The pre-classified spectrum resource includes: a spectrum band *M* in a first state, a spectrum band *M'* in a second state, and a spectrum band *N* in a third state.

Herein, the spectrum band *M* in a first state is a spectrum band in an occupied state, and at least one link in the spectrum band in an occupied state is in an occupied state.

The spectrum band *M'* in a second state is a spectrum band in a released state, where the spectrum band in a released state is a spectrum band including spectrum resources that are released by all services in the spectrum band *M* in a first state.

The spectrum band *N* in a third state is a spectrum band *N* in an unused state.

Specifically, herein, an entire spectrum band in the pre-classified spectrum resource is recorded as *S* , and before the continuous available spectrum resource is allocated to the newly added service, the entire spectrum band *S* is first classified into three sets: a spectrum band *M* in an occupied state, a spectrum band *M'* in a released state, and a spectrum band *N* in an unused state, where the entire spectrum band is *S =M*∪*M'*∪*N*.

Assuming that there are k service types, a service type i (1≤*i*≤*k*) needs to occupy a spectrum width of s(i), *M*(*i*) is recorded as a spectrum band in an occupied state of the service type i, and *M'*(*i*) is recorded as a spectrum band in a released state of the service type i. The spectrum band *M* in an occupied state is a union set of spectrum bands, which are being occupied, of all service types, and is recorded as *M*=∪_{1≤*i*≤}*ₖ M*(*i*); and the spectrum band *M'* in a released state is a union set of spectrum bands, which were occupied before, of all service types, and is recorded as *M'*=∪_{1≤*i*≤}*ₖ M'*(*i*)*.*

Herein, the allocating spectrum resources to a received newly added service is specifically: when a spectrum resource having corresponding bandwidth needs to be allocated to a newly added service d of the i^{th} type, it is checked first whether at least one link including a continuous available spectrum resource exists in the spectrum band *M*(*i*) in an occupied state of the type i; if a continuous available spectrum resource exists in the spectrum band *M*(*i*) in an occupied state, a spectrum resource is allocated to the newly added service d; if the continuous available spectrum resource does not exist in the spectrum band *M*(*i*) in an occupied state, it is checked whether at least one link including a continuous available spectrum resource exists in the spectrum band *M*(*i*) in a released state of the type i; if a continuous available spectrum resource exists, a spectrum resource is allocated to the newly added service d, and if there is no continuous available spectrum resource, a continuous available spectrum resource is selected from the spectrum band *N* in an unused state, and the continuous available spectrum band is recorded as [*l*,*l*+*s*(*i*)], where *l* is a start value of spectrums in the spectrum band *N* in an unused state, and *l*+*s*(*i*) is an endpoint value of spectrums needed in the spectrum band *N* in an unused state by the newly added service d.

302: The spectrum allocation device updates status information of the spectrum resource occupied by the newly added service.

After the continuous available spectrum resource is allocated to the newly added service, a current usage status of the spectrum resource is updated, which is specifically, for example, as follows:
a state of the service of the i^{th} type in the spectrum band in an occupied state changes; if the service of the i^{th} type is allocated to the spectrum band *N* in an unused state, the state of the spectrum band in an occupied state changes to *M*(*i*):=*M*(*i*)∪[*l*,*l*+*s*(*i*)], where a state of *M*(*i*) changes to a union set between the current spectrum band *M*(*i*) in an occupied state and a portion of [*l*,*l*+*s*(*i*)] in the spectrum band *N* in an unused state, and the state of the spectrum band in an unused state changes to *N:*=*N-*[*l*,*l*+*s*(*i*)], that is, the current unused state is updated, and [*l*,*l*+*s*(*i*)] is removed from the current unused state.

If processing on the service of the i^{th} type is completed, the spectrum band [*l*,*l*+*s*(*i*)] in *M*(*i*)is released, and then a state of *M*(*i*) changes to *M*(*i*):=*M*(*i*)-[*l*,*l*+*s*(*i*)], that is, the released spectrum band [*l*,*l*+*s*(*i*)] is subtracted from the spectrum band *M*(*i*) in an occupied state when the service of the i^{th} type occupies the portion of [*l*,*l*+*s*(*i*)]; therefore, a state of a spectrum band *M*'(*i*) in a released state also changes, that is, *M'*(*i*):=*M'*(*i*)∪[*l*,*l*+*s*(*i*)], where the current state of the *M*(*i*) is a union set between the spectrum band *M'*(*i*) in a released state and the currently released spectrum band [*l*,*l*+*s*(*i*)].

According to the spectrum allocation method provided in this embodiment of the present invention, when a newly added service is received, a continuous available spectrum resource is allocated to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; in this way, a problem that a spectrum resource is not fully used due to bandwidth fragments is resolved, and therefore, network resource utilization is improved.

Specifically, descriptions are provided below with reference to specific embodiments.

### Embodiment 2

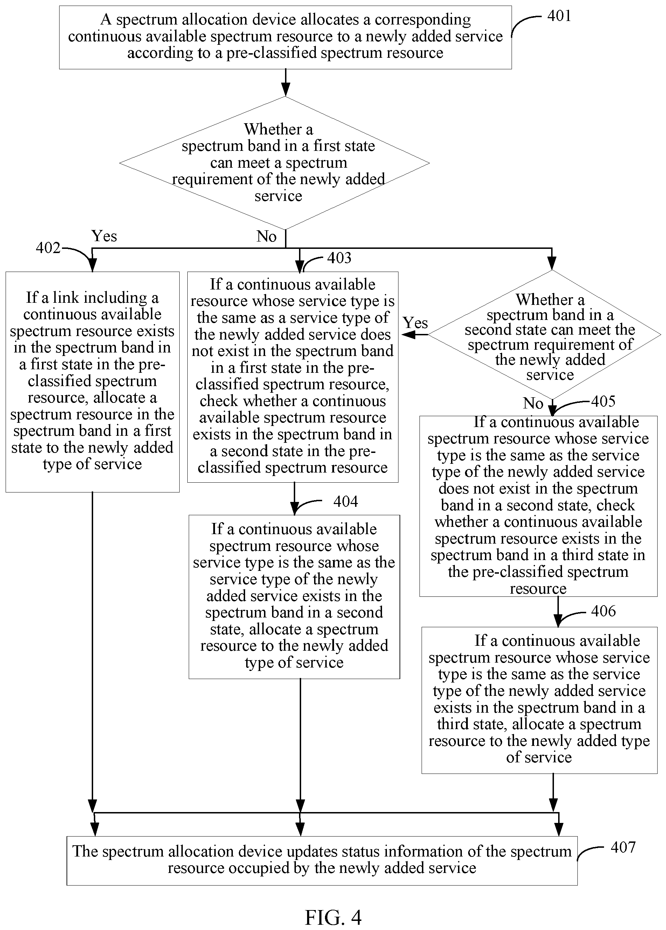

Based on the embodiment shown in FIG. 4, referring to FIG. 4, this embodiment of the present invention provides a spectrum allocation method. Referring to FIG. 4, FIG. 4 shows a process in which a spectrum allocation device allocates a continuous available spectrum resource to a newly added service, and specific steps are as follows:
401: A spectrum allocation device allocates a corresponding continuous available spectrum resource to a newly added service according to a pre-classified spectrum resource.

The pre-classified spectrum resource includes: a spectrum band *M* in a first state, a spectrum band *M'* in a second state, and a spectrum band *N* in a third state.

Herein, the spectrum band *M* in a first state is a spectrum band in an occupied state, and at least one link in the spectrum band in an occupied state is in an occupied state.

The spectrum band *M'* in a second state is a spectrum band in a released state, where the spectrum band in a released state is a spectrum band including spectrum resources that are released by all services in the spectrum band *M* in a first state.

The spectrum band *N* in a third state is a spectrum band *N* in an unused state.

Specifically, herein, an entire spectrum band in the pre-classified spectrum resource is recorded as *S*, and before the continuous available spectrum resource is allocated to the newly added service, the entire spectrum band *S* is first classified into three sets: a spectrum band *M* in an occupied state, a spectrum band *M'* in a released state, and a spectrum band *N* in an unused state, where the entire spectrum band is *S*=*M*∪*M'*∪*N*.

Assuming that there are k service types, a service type i (1≤*i*≤*k*) needs to occupy a spectrum width of s(i), *M*(*i*) is recorded as a spectrum band in an occupied state of the service type i, and *M*'(*i*) is recorded as a spectrum band in a released state of the service type i. The spectrum band *M* in an occupied state is a union set of spectrum bands, which are being occupied, of all service types, and is recorded as *M*=∪_{1≤*i*≤}*ₖM*(*i*); and the spectrum band *M'* in a released state is a union set of spectrum bands in a released state of all service types, and is recorded as *M'*=∪_{1≤}*_{i≤k}M'*(*i*)*.*

When the spectrum resource is allocated to the newly added service, if a service type of the newly added service is the same as a service type of the spectrum band *M* in a first state, the spectrum band *M* in a first state that selects and uses the same service type is preferentially allocated to the newly added service. If a link including a continuous available spectrum resource exists in the spectrum band *M* in a first state in the pre-classified spectrum resource, step 402 is performed; if a link including a continuous available spectrum resource does not exist in the spectrum band *M* in a first state in the pre-classified spectrum resource, step 403 to step 404 or step 405 to step 406 are performed.

402: If a link including a continuous available spectrum resource exists in the spectrum band *M* in a first state in the pre-classified spectrum resource, allocate a spectrum resource in the spectrum band *M* in a first state to the newly added type of service.

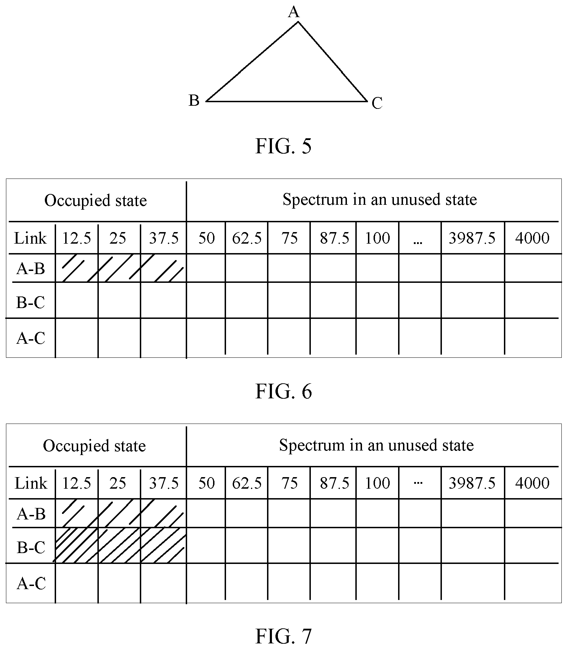

Herein, in a triangular network topology that is shown in FIG. 5 and that is formed by three nodes A, B, and C, for example, it is assumed that a total available bandwidth of a network is 4000 GHz, where an occupied bandwidth resource that already exists in the spectrum band *M* in a first state is 37.5 GHz, and a service 1 in a link A to B exists between nodes A and B. The spectrum allocation device is described by using an example in which the received occupied bandwidth resource is 37.5 GHz, and a newly added service 2 in a link B to C exists between nodes B and C. First, as shown by a shadow area of the link A to B in FIG. 6, in an entire spectrum resource, the service 1 already exists in the spectrum band *M* in a first state (that is, the spectrum band *M* in an occupied state) in the link A to B, and the service 1 occupies a spectrum resource of [0,37.5] in the link A to B.

When spectrum resources are allocated to the newly added service 2, for the newly added service 2, the spectrum band *M* in a first state is searched for a continuous available spectrum resource (that is, a bandwidth resource of 37.5 GHz needs to be occupied, and a spectrum range is [0,37.5]) according to a bandwidth resource occupied by the newly added service 2. As shown by a shadow area of a link B to C in FIG. 6, a continuous available spectrum resource of [0,37.5] exists in the link B to C, and the continuous available spectrum resource of [0,37.5] in the spectrum band *M* in a first state in which the link B to C is located is allocated to the newly added service 2, as shown by a shadow area of a link B to C in FIG. 7.

The service 1 and the service 2 are two types of services in different links of spectrum bands that occupy a same state and that is in the spectrum range of [0,37.5]; therefore, when the spectrum allocation device allocates resources to services belonging to a same spectrum range, the spectrum allocation device allocates a continuous available spectrum resource to different services according to the same spectrum range, which therefore improves usage efficiency of the spectrum resource.

Alternatively,
403: If a continuous available spectrum resource whose service type is the same as a service type of the newly added service does not exist in the spectrum band *M* in a first state in the pre-classified spectrum resource, check whether a continuous available spectrum resource exists in a spectrum band *M'* in a second state in the pre-classified spectrum resource.

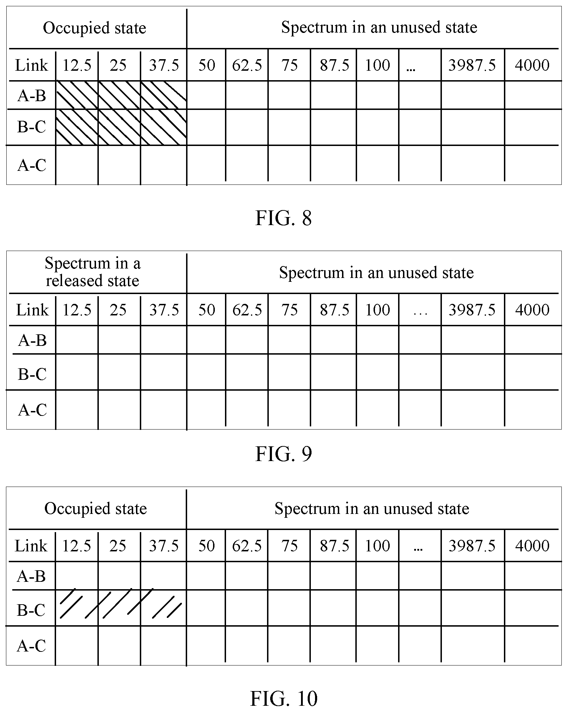

Herein, spectrum states in FIG. 8 are used as an example. If in the spectrum band *M* in a first state, the continuous available spectrum resource needed by a service type of the newly added service 2 in step 402 does not exist in the range of ^{[0,37.5]} in the link A to B and in the link B to C, that is, the link B to C occupies the spectrum resource of a bandwidth of 37.5 GHz.

When services in the link A to B and the link B to C in the range of [0,37.5] are released, a first type of services (that is, a service occupying the range of [0,37.5]) is *M*(1)=Φ, and *M*'(1)=[0,37.51]. As shown in FIG. 9, in this case, the continuous available spectrum resource that can meet a requirement of the newly added service 2 exists in the spectrum band *M'* in a second state.

404: If a continuous available spectrum resource whose service type is the same as the service type of the newly added service exists in the spectrum band *M'* in a second state, allocate a spectrum resource to the newly added type of service.

Herein, if the continuous available spectrum resource whose type is the same as the type of the newly added service 2 exists in the spectrum band *M'* in a second state, a state in the entire spectrum resource changes to: the newly added service 2 in the link B to C occupies a spectrum resource of [0,37.5] in the spectrum band *M'* in a released state; in this case, the spectrum band *M* in an occupied state of the newly added service 2 changes to *M*(1)=[0,37.5], where because the newly added service 2 and the existing service 1 belong to the same type of service, a state of the spectrum band *M* in an occupied state of the newly added service 2 is *M*(1).

Specifically, that the continuous available resource whose type is the same as the type of the newly added service 2 exists in the spectrum band *M'* in a second state is specifically: a spectrum resource that is released and that is not occupied exists in each link (which is shown in FIG. 9) of a first type of services, that is, after resources in all links in the spectrum resource in the range of [0,37.5] in the spectrum band *M* in a first state are all released, the spectrum resource in the range of [0,37.5] is classified into the spectrum band *M'* in a second state; therefore, the spectrum band *M'* in a second state can allocate the continuous available spectrum resource to the newly added service 2, and the state of the spectrum resource is shown in FIG. 10.

Alternatively,
405: If a continuous available spectrum resource whose service type is the same as a service type of the newly added service does not exist in the spectrum band *M'* in a second state, check whether a continuous available spectrum resource exists in the spectrum band *N* in a third state in the pre-classified spectrum resource.

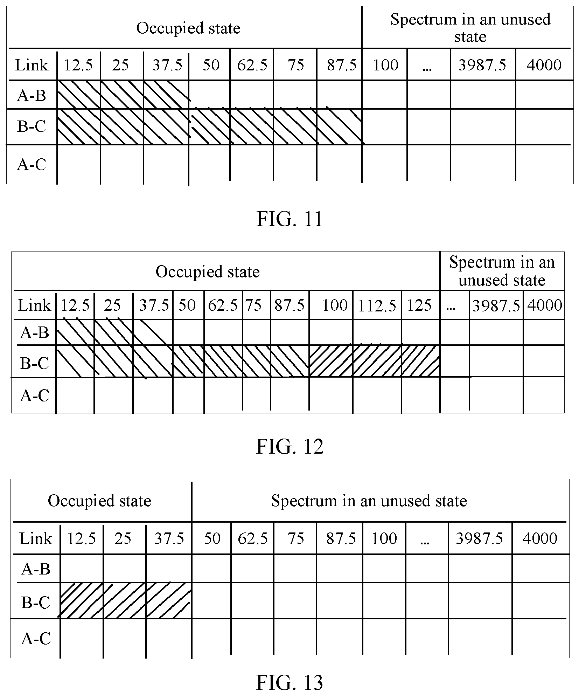

Herein, if the continuous available spectrum resource for the newly added service 2 does not exist in the spectrum band *M* in a first state, and in a current state, there is no spectrum band *M'* in a second state that is applicable to the newly added service 2, that is, in the current state, all links in the spectrum band *M* in a first state do not release the spectrum resource; therefore, the continuous available spectrum resource for the newly added service 2 does not exist in the spectrum band *M'* in a second state. Therefore, the spectrum band *N* in a third state is searched for whether the continuous available spectrum resource that corresponds to the newly added service 2 exists. A state of a spectrum resource shown in FIG. 11 is used as an example. There are separately three services in the link A to B and the link B to C in the current spectrum band *M* in a first state, which separately occupy spectrum resources in [0,37.5] and [37.5,87.5], where there are two types of services in the three services. As shown in FIG. 11, a first type of services occupies a spectrum resource in [0,37.5] , and a second type of service occupies a spectrum resource in [37.5,87.5]. Because there is no continuous available spectrum resource needed by the service type of the newly added service 2 in both the spectrum band *M* in a first state and the spectrum band *M'* in a second state, the continuous available spectrum resource that can meet a requirement of the newly added service 2 is found in the spectrum band *N* in a third state, where the newly added service 2 is a service that occupies the link B to C and needs a bandwidth of 37.5 GHz.

406: If a continuous available spectrum resource whose service type is the same as the service type of the newly added service exists in the spectrum band *N* in a third state, allocate a spectrum resource to the newly added type of service.

If the newly added service 2 cannot obtain the continuous available spectrum resource in both the spectrum band *M* in an occupied state and the spectrum band *M'* in a released state, the spectrum band *N* in an unused state is searched for the continuous available spectrum resource, that is, the spectrum band *N* in an unused state allocates the spectrum resource of 37.5 GHz to the newly added service 2. In this case, the spectrum band *M* in an occupied state of the newly added service 2 changes to *M*(1)=*M*(*i*)∪[87.5,125], and the spectrum band *N* in an unused state changes to *N*(1)=*N*(*i*)-[87.5,125]. As shown in FIG. 12, the newly added service 2

occupies a spectrum range of [87.5,12] in the spectrum band *N* in an unused state.

If there is no continuous available spectrum resource, which can meet a requirement of the newly added service, in the spectrum band *M* in a first state, the spectrum band *M'* in a second state, and the spectrum band *N* in a third state, the newly added service is blocked.

407: The spectrum allocation device updates status information of the spectrum resource occupied by the newly added service.

That the spectrum allocation device updates status information of the spectrum resource occupied by the newly added service is described by using the case described in step 402 as an example.

As shown in FIG. 6 and FIG. 7, when the service 1 already exists in the link A to B in the spectrum band *M* in a first state, the state of the entire spectrum resource is shown in FIG. 6. A state of the service 1 in the spectrum band *M* in a first state after the spectrum resource is allocated, that is, a state of the spectrum band in an occupied state, is *M*(1)=[0,37.5]. As shown in FIG. 6, the spectrum resource occupied by the newly added service 1 is shown by the shadow area in FIG. 6; the newly added service 1 is an empty set in the spectrum band in a released state, and is recorded as *M*'(1)=Φ that is, a state of the current newly added service 1 in the spectrum band in a released state is unused; in addition, a current state of the spectrum band in an occupied state is *M*=[0,37.5] ; a state of the spectrum band in a released state is an empty set, and is recorded as *M'*=Φ, that is, currently, no service releases spectrum resources; in this case, a state of the spectrum band *N* in an unused state changes to *N*=[37.5,4000], that is, a spectrum resource that is currently in an idle state.

When the occupied bandwidth resource that is already received by the spectrum allocation device is 37.5 GHz, and the newly added service 2 in a link B to C exists between nodes B and C, as shown in FIG. 7, the spectrum resource of the newly added service 2 in the link B to C is [0,37.5], and the service 1 and the newly added service 2 belong to a same type of services; therefore, after the spectrum resource is allocated, the entire spectrum states change to *M*(1)=[0,37.5], *M*'(1)=Φ, *M*=[0,37.5], *M*'=Φ, and *N*=[37.5,4000], that is, the spectrum state of the service 1 is the spectrum resource in [0,37.5] in a spectrum in an occupied state in the link A to B, and the spectrum state of the newly added service 2 is the spectrum resource in [0,37.5] in a spectrum in an occupied state in the link B to C. In FIG. 7, the spectrum resources occupied by the service 1 and the newly added service 2 are shown by a shadow area; spectrum resources in a released state of the service 1 and the newly added service 2 are an empty set, that is, currently, no service releases spectrum resources; the spectrum resource in the spectrum band *N* in an unused state in the entire spectrum resource is updated to [37.5,4000].

Herein, when the service 1 releases the spectrum resource, the case in step 402 is used as an example, and the spectrum resource of the newly added service 1 is released from the network, that is, the spectrum resource in [0,37.5] is released; in this case, the state of the entire spectrum resource is shown in FIG. 13. In this case, updated states of the entire spectrum resources are *M*(1)=[0,37.5] , *M'*(1)=Φ, *M*=[0,37.5], and *N*=[37.5,4000], that is, because the current service 1 is released from the spectrum band *M* in an occupied state, and the newly added service 2 belongs to the same type of services as the service 1 but is not released, the state of the first type of services does not change (that is, *M*(1)=[0,37.5]), where as shown in FIG. 13, the spectrum band in an occupied state of the newly added service 2 is the shadow area shown in FIG. 13, and the newly added service 2 does not release the spectrum resource, and therefore, the spectrum band *M'* in a released state of the newly added service 2 is an empty set. In this case, in the entire spectrum resource, the spectrum resource in an occupied state is *M*=[0,37.5] , that is, the current state of the spectrum band in an occupied state of the newly added service 2; herein, the unused spectrum resources, in the entire spectrum resource, of the service 1 and the newly added service 2 are *N*=[37.5,4000].

That the spectrum allocation device updates status information of the spectrum resource occupied by the newly added service is described by using the case described in step 403 as an example.

Herein, if the continuous available spectrum resource does not exist in the spectrum band *M* in a first state, that is, the spectrum resource of the type of the newly added service 2 does not exist, the spectrum band *M'* in a second state is searched for whether the continuous available spectrum resource whose type is the same as the type of the newly added service 2 exists. In this case, when resources in all links in the spectrum resource in [0,37.5] in the spectrum band *M* in a first state are all released, referring to FIG. 9, the spectrum resource in the range of [0,37.5] is classified into the spectrum band *M'* in a second state. In this case, a state of the spectrum band *M* in a first state is updated to *M*(1)*=M*(1)-[0,37.5], as shown in FIG. 9, *M*(1)=Φ,

and the spectrum band *M'* in a second state is updated to *M*'(1)=[0,37.5].

When the spectrum band *M'* in a second state allocates a continuous available spectrum resource to the newly added service 2, the spectrum band *M* in a first state for the newly added service 2 changes to *M*(1)=[0,37.5]∪*M*(1), and the spectrum band *M'* in a second state of the newly added service 2 changes to *M'*(1)=*M*'(1)-[0,3 7.5]. As shown in FIG. 10, for the spectrum band *M* in a first state of the newly added service 2, *M*(1)=[0,37.5]; and for the spectrum band *M'* in a second state of the newly added service 2, *M'*(1)=Φ.

That the spectrum allocation device updates status information of the spectrum resource occupied by the newly added service is described by using the case described in step 405 as an example, and details are shown in FIG. 11 and FIG. 12.

If there is no continuous available spectrum resource of the newly added service 2 in the spectrum band *M* in a first state and the spectrum band *M'* in a second state, the continuous available spectrum resource is allocated to the newly added service 2 in a third state. In this case, the state of the spectrum resource *M* in a first state for the newly added service 2 is updated to *M*(1)=*M*(1)∪[87.5,125], and the state of the spectrum resource *M'* in a second state for the newly added service 2 is updated to *M'*(1)=Φ. Because the first type of services does not release the spectrum resource currently, the spectrum band *N* in a third state for the newly added service 2 changes to *N*(1)=*N*(*i*)-[87.5,125]. Herein, because the newly added service 2 and the existing service 1 are both the first type of services, that is, a service occupying a bandwidth of 37.5 GHz, the newly added service 2 and the existing service 1 both belong to the first type of services.

As shown in FIG. 11, there are two types of services on the current spectrum band *M* in a first state, and herein, the first type of services separately occupies the spectrum resource in the range of [0,37.5] in the link A to B and in the link B to C, and the second type of services occupies the spectrum resource in [37.5,87.5] in the link B to C. Therefore, for the newly added service 2, the spectrum states in FIG. 11 are *M*(1)=[0,37.5], *M*(2)=[37.5,87.5] , *M*=[0,87.5], *M*'(1)=Φ, *M*'(2)=Φ, *M'*=Φ, and *N*=[87.5,4000], that is, the first type of services occupies the spectrum resource in the range of [0,37.5], and the second type of services occupies the spectrum resource in [37.5,87.5], the spectrum range of the spectrum band *M* in a first state of the entire spectrum resources is [0,87.5], no service in the spectrum resource *M'* in a second state releases a spectrum resource currently, and a spectrum range of the spectrum resource *N* in a third state is [87.5,4000].

As shown in FIG. 12, when the occupied bandwidth resource that is already received by the spectrum allocation device is 37.5 GHz, and the newly added service 2 in a link B to C exists between nodes B and C, because the continuous available spectrum resource that meets a requirement of the service type of the newly added service 2 does not exist in the spectrum band *M* in a first state, a spectrum resource in [87.5,125] in the spectrum resource *N* in a third state is allocated to the newly added service 2, so that after the spectrum resource is allocated, the entire spectrum states change to: *M*(1)=[0,37.5]∪[87.5,125], *M*(2)=[37.5,87.5], *M*'(1)=Φ, *M'*(2)=Φ, *M*=[0,125], *M'*=Φ, and *N*=[125,4000], that is, a spectrum state of the existing first type of services is spectrum resources in [0,37.5] in a spectrum in an occupied state in the link A to B and the link B to C, a spectrum state of the newly added service 2 is spectrum resources in [87.5,12] in the spectrum in an occupied state in the link B to C, and a spectrum state of the existing second type of services is spectrum resources in [37.5,87.5] in the spectrum in an occupied state in the link B to C. In FIG. 12, the spectrum resources occupied by the existing first type of services, the newly added service 2, and the existing second type of services are shown by the shadow area. Spectrum resources in a released state of the existing first type of services, the newly added service 2, and the existing second type of services are an empty set, that is, currently, no service releases spectrum resources. In the entire spectrum resource, the spectrum resource of the spectrum band *N* in an unused state is updated to [125,4000].

Optionally, when the service 1 releases the spectrum resource, and the status information of the spectrum resource occupied by the newly added service is updated, the method further includes the following manners:
when a service on the spectrum band *M'* in a second state releases all spectrum resources, the spectrum resources released in the spectrum band *M'* in a second state are updated to the spectrum band *N* in a third state.

Herein, if the service on the spectrum band *M'* in a second state releases all the spectrum resources, the spectrum resources released in the spectrum band *M'* in a second state (that is, the spectrum band in a released state) are classified into the spectrum resources in the spectrum band *N* in a third state, so that resources in the spectrum band in an unused state are richer, and idle spectrum resources can be provided for more services.

Alternatively,
when a service on the spectrum band *M'* in a second state releases all spectrum resources, a state of the spectrum band *N* in a third state is kept unchanged.

According to the spectrum allocation method provided in this embodiment of the present invention, when a newly added service is received, a continuous available spectrum resource is allocated to the newly added service according to a pre-classified spectrum resource, where the pre-classified spectrum resource is classified into a spectrum band *M* in an occupied state, a spectrum band *M'* in a released state, and a spectrum band *N* in an unused state; when the continuous available spectrum resource is allocated to the newly added service according to the three classifications, a same type of service occupies only a same type of spectrum band; spectrum resources in the three states are layered according to the classification of the spectrum resources, so that only one type of service exists at a same layer, and therefore, different types of services are located at different spectrum resource layers; in this way, a problem that a spectrum resource is not fully used due to bandwidth fragments is resolved, and therefore, network resource utilization is improved.

### Embodiment 3

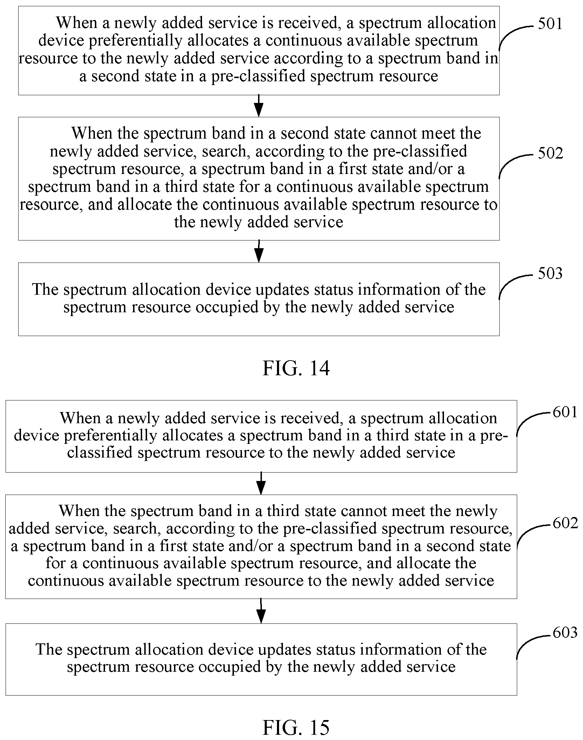

Based on the embodiment shown in FIG. 3, referring to FIG. 14, this embodiment of the present invention provides a spectrum allocation method. Referring to FIG. 14, FIG. 14 shows a process in which a spectrum allocation device allocates a continuous available spectrum resource to a newly added service, and specific steps are as follows:
501: When a newly added service is received, a spectrum allocation device preferentially allocates a continuous available spectrum resource to the newly added service according to a spectrum band *M'* in a second state in a pre-classified spectrum resource.

The pre-classified spectrum resource includes: a spectrum band *M* in a first state, the spectrum band *M'* in a second state, and a spectrum band *N* in a third state.

Herein, the spectrum band *M* in a first state is a spectrum band in an occupied state, and at least one link in the spectrum band in an occupied state is in an occupied state.

The spectrum band *M'* in a second state is a spectrum band in a released state, where the spectrum band in a released state is a spectrum band including spectrum resources that are released by all services in the spectrum band *M* in a first state.

The spectrum band *N* in a third state is a spectrum band *N* in an unused state.

Specifically, herein, an entire spectrum band in the pre-classified spectrum resource is recorded as *S*, and before the continuous available spectrum resource is allocated to the newly added service, the entire spectrum band *S* is first classified into three sets: a spectrum band *M* in an occupied state, a spectrum band *M'* in a released state, and a spectrum band *N* in an unused state, where the entire spectrum band is *S*=*M*∪*M'*∪*N*.

Assuming that there are k service types, a service type i (1≤*i*≤*k*) needs to occupy a spectrum width of s(i), *M*(*i*) is recorded as a spectrum band in an occupied state of the service type i, and *M*'(*i*) is recorded as a spectrum band in a released state of the service type i. The spectrum band *M* in an occupied state is a union set of spectrum bands, which are being occupied, of all service types, and is recorded as *M*=∪_{1≤*i*≤}*ₖM*(*i*); and the spectrum band *M'* in a released state is a union set of spectrum bands, which were occupied before, of all service types, and is recorded as *M'*=∪_{1≤*i*≤}*ₖM'*(*i*)*.*

Herein, the spectrum resources are preferentially allocated to the newly added service, and when spectrum resources that can meet a bandwidth occupied by a service type of the newly added service exist in the spectrum band *M'* in a released state, a continuous available spectrum resource is allocated to the newly added service.

Herein, the spectrum resources in a released state are preferentially allocated to the newly added service, which improves a possibility of successful allocation for a service for the first time, and improves deployment efficiency of a network.

502: When the spectrum band *M'* in a second state cannot meet the newly added service, search, according to the pre-classified spectrum resource, a spectrum band *M* in a first state and/or a spectrum band *N* in a third state for a continuous available spectrum resource, and allocate the continuous available spectrum resource to the newly added service.

When the spectrum band *M'* in a second state cannot meet the newly added service, the spectrum band *M* in a first state and/or the spectrum band *N* in a third state are searched for the continuous available spectrum resource that can meet the newly added service.

Herein, because a continuous available resource of the type to which the newly added service belongs does not exist in the spectrum band *M'* in a second state, the spectrum band *M* in a first state and/or the spectrum band *N* in a third state are searched for the continuous available spectrum resource for the newly added service, which are specifically described as follows:
if at least one link in the spectrum band *M* in a first state can meet a continuous available spectrum band resource needed by the newly added service, the continuous available spectrum resource belonging to the type of service is allocated to the newly added service; and/or if the continuous available spectrum resource that can meet a requirement of the newly added service exists in the spectrum band *N* in a third state, the continuous available spectrum resource to which the type of service belongs is allocated to the newly added service.

If both the spectrum band *M* in a first state and/or the spectrum band *N* in a third state cannot meet the continuous available spectrum resource needed by the newly added service, the service is blocked.

503: The spectrum allocation device updates status information of the spectrum resource occupied by the newly added service.

After the spectrum band *M'* in a second state allocates the continuous available spectrum resource to the newly added service, a change occurs to a state of the spectrum band in an occupied state in the entire spectrum resources. For example, assuming that the newly added service is a service of an i^{th} type, and occupies a bandwidth of 50 GHz, because a continuous available spectrum resource *M*'=[37.5,87.5] is preferentially allocated in the spectrum band *M'* in a second state, the continuous available spectrum resource allocated in the spectrum band *M'* in a second state is [37.5,87.5], a state of the spectrum band *M* in a first state (that is, a spectrum band *M* in an occupied state) currently changes to *M*(*i*):=*M*(*i*)∪[37.5,87.5], and a state of the spectrum band *M'* in a second state changes to *M'*(*i*):=*M'*(*i*)-[37.5,87.5]. According to the spectrum allocation method provided in this embodiment of the present invention, when a newly added service is received, spectrum resources that are an integer multiple of a bandwidth needing to be occupied by the newly added service are preferentially allocated according to the bandwidth needing to be occupied by the newly added service, where when the newly added service is received, a spectrum resource *M'* in a second state in the entire spectrum resources is preferentially selected, so that impact on a spectrum band in an occupied state can be reduced, which lowers a possibility of generating bandwidth fragments, and further improves network resource utilization.

### Embodiment 4

Based on the embodiment shown in FIG. 3, referring to FIG. 15, this unclaimed embodiment provides a spectrum allocation method. Referring to FIG. 15, FIG. 15 shows a process in which a spectrum allocation device allocates a continuous available spectrum resource to a newly added service, and specific steps are as follows:
601: When a newly added service is received, a spectrum allocation device preferentially allocates a spectrum band *N* in a third state in a pre-classified spectrum resource to the newly added service.

The pre-classified spectrum resource includes: a spectrum band *M* in a first state, a spectrum band *M'* in a second state, and a spectrum band *N* in a third state.

Herein, the spectrum band *M* in a first state is a spectrum band in an occupied state, and at least one link in the spectrum band in an occupied state is in an occupied state.

The spectrum band *M'* in a second state is a spectrum band in a released state, where the spectrum band in a released state is a spectrum band including spectrum resources that are released by all services in the spectrum band *M* in a first state.

The spectrum band *N* in a third state is a spectrum band *N* in an unused state.

Specifically, herein, an entire spectrum band in the pre-classified spectrum resource is recorded as *S*, and before the continuous available spectrum resource is allocated to the newly added service, the entire spectrum band *S* is first classified into three sets: a spectrum band *M* in an occupied state, a spectrum band *M'* in a released state, and a spectrum band *N* in an unused state, where the entire spectrum band is *S*=*M*∪*M'*∪*N.*

Herein, because the spectrum band *N* in a third state belongs to the spectrum band in an unused state, when the newly added service is received, the spectrum band *N* in a third state is preferentially used, and spectrum resources in the spectrum band *N* in a third state are allocated according to a bandwidth needed by the newly added service.

602: When the spectrum band *N* in a third state cannot meet the newly added service, search, according to the pre-classified spectrum resource, a spectrum band *M* in a first state and/or a spectrum band *M'* in a second state for a continuous available spectrum resource, and allocate the continuous available spectrum resource to the newly added service.

When the spectrum band *N* in a third state cannot meet the newly added service, the spectrum band *M* in a first state and/or the spectrum band *M'* in a second state are searched for the continuous available spectrum resource that can meet a requirement of a service type of the newly added service.

If at least one link in the spectrum band *M* in a first state includes a continuous available spectrum band resource that can meet the requirement of the service type of the newly added service, the continuous available spectrum resource is allocated to the newly added service; and/or if the continuous available spectrum resource that can meet the requirement of the service type of the newly added service exists in the spectrum band *M'* in a second state, the continuous available spectrum resource is provided for the newly added service.

If both/either the spectrum band *M* in a first state and/or the spectrum band *M'* in a second state cannot meet the continuous available spectrum resource needed by the service type of the newly added service, the service is blocked.

603: The spectrum allocation device updates status information of the spectrum resource occupied by the newly added service.

Herein, the spectrum allocation device updates status information of the spectrum resource occupied by the newly added service, which specifically includes the following two cases:
Case 1: If the spectrum band *N* in a third state can meet a spectrum requirement of the newly added service, the spectrum resource is allocated according to a bandwidth occupied by the newly added service; therefore, in the entire spectrum resource, that a state of the spectrum band *N* in a third state changes is described by using an instance:
   Assuming that a bandwidth occupied by the newly added service 1 is 37.5 GHz, and the continuous available spectrum resource, that is, a continuous available spectrum resource in [0,37.5] , in the spectrum band *N* in a third state is allocated to the newly added service 1. In this case, a state of the newly added service 1 that corresponds to the spectrum band *M* in a first state (that is, a spectrum band in an occupied state) changes to *M*(1)=*M*(1)∪[0,37.5], the spectrum band *M'* in a second state is an empty set, and the spectrum band *N* in a third state is updated to *N*=*N*-[0,37.5].
Case 2: A parameter of the newly added service 1 in case 1 is used as an example, and if the spectrum band *N* in a third state cannot meet a spectrum resource requirement of the newly added service 1, the continuous available spectrum resource is allocated in the spectrum band *M* in a first state and/or the spectrum band *M'* in a second state.

If the spectrum band *M* in a first state and/or the spectrum band *M'* in a second state allocates a continuous available spectrum resource to the newly added service 1, a state of the spectrum band *M* in a first state and/or the spectrum band *M'* in a second state changes to: when the spectrum band *M* in a first state allocates the continuous available spectrum resource to the newly added service 1, the spectrum resource band *M* in a first state for the newly added service 1 is *M*(1):=*M*(1)∪[0,37.5], and the spectrum band *M*'(1) in a second state for the newly added service 1 keeps unchanged; when the spectrum band *M'* in a second state allocates the continuous available spectrum resource to the newly added service 1, the spectrum band *M'* in a second state for the newly added service 1 is *M*'(1):=*M*'(1)-[0,37.5], and the spectrum band *M* in a first state for the newly added service 1 is *M*(1):=*M*(1)∪[0,37.5].

If both/either the spectrum band *M* in a first state and/or the spectrum band *M'* in a second state cannot meet the continuous available spectrum resource needed by the newly added service, the service is blocked.

According to the spectrum allocation method provided in this unclaimed embodiment, when a newly added service is received, a spectrum band in a third state is preferentially enabled to be a continuous available spectrum resource needed by the newly added service, so that a bandwidth requirement of the newly added service can be met in an unused spectrum band. If the spectrum band in a third state cannot meet the newly added service, a spectrum band *M* in a first state and/or a spectrum band *M'* in a second state are searched for a continuous available spectrum resource, so as to allocate the continuous available spectrum resource to the newly added service, which therefore resolves a problem that a spectrum resource is not fully used due to bandwidth fragments, and improves network resource utilization.

According to the descriptions of the foregoing implementation manners, a person skilled in the art may clearly understand that the present invention can be implemented by using hardware, firmware, or a combination thereof. When the present invention is implemented by using software, the foregoing functions may be stored in a computer readable medium or may be used as one or more instructions or codes on a computer readable medium for transmission. The computer readable medium includes a computer storage medium and a communications medium, where the communications medium includes any medium for transmitting a computer program from one place to another place. The storage medium may be any available medium that can be accessed by a computer. The computer readable medium includes, but is not limited to, a RAM, a ROM, an EEPROM, a CD-ROM, another optical storage, a magnetic storage medium, another magnetic storage device, or any other medium that can be used to carry or store expected program code having a form of an instruction or a data structure and that can be accessed by a computer. In addition, any connection may be properly a computer readable medium. For example, if software is transmitted from a website, a server, or another remote source by using a coaxial cable, an optical fiber cable, a twisted pair, a digital subscriber line (DSL), or a wireless technology, such as infrared, radio, and microwaves, the coaxial cable, the optical fiber cable, the twisted pair, the DSL, or the wireless technology, such as infrared, radio, and microwaves are included in fixations to which they belong. A disk (Disk) and a disc (disc) that are used in the present invention include a compact disk (CD), a laser disc, an optical disc, a digital versatile disc (DVD), a floppy disk, and a Blu-ray disc, where a disk generally copies data magnetically, and a disc optically copies data by using laser. The foregoing combinations are also included in a protection scope of the computer readable medium.

In summary, the foregoing descriptions are merely exemplary embodiments of the technical solutions of the present invention, but are not intended to limit the protection scope of the present invention. Any modification, equivalent replacement, and improvement made without departing from the principle of the present invention shall fall within the protection scope of the present invention as defined in the attached claims.

## Claims

1. A spectrum allocation device (1), comprising:
an allocation unit (11), configured to allocate a corresponding continuous available spectrum resource to a newly added service of service type i of k possible service types, each possible service type occupying a predefined spectrum width s(i), 1≤i≤k, according to a pre-classified spectrum resource, wherein the pre-classified spectrum resource comprises: a spectrum band *M* in a first state, a spectrum band *M'* in a second state, and a spectrum band *N* in a third state, wherein the spectrum band *M* in a first state is a spectrum band in an occupied state, and at least one link in the spectrum band in an occupied state is in an occupied state, the spectrum band *M'* in a second state is a spectrum band in a released state, wherein the spectrum band in a released state is a spectrum band comprising spectrum resources that are released by all services in the spectrum band *M* in a first state, and the spectrum band *N* in a third state is a spectrum band *N* in an unused state, and wherein, if a continuous available spectrum resource having a bandwidth corresponding to the predefined bandwidth of the newly added service of type i exists in the spectrum band *M* in the first state or in the spectrum band *M'* in the second state, the allocation unit (11) is configured to allocate a continuous available spectrum resource to the newly added service according to the spectrum band *M* in the first state or according to the spectrum band *M'* in a second state in the pre-classified spectrum resource, respectively; and
an update unit (12), configured to update status information of the spectrum resource that is occupied by the newly added service and that is allocated by the allocation unit (11).

2. The spectrum allocation device according to claim 1, wherein the allocation unit (11) is specifically configured to:
when the spectrum resource is allocated to the newly added service, if the service type i of the newly added service is the same as a service type of the spectrum band *M* in a first state, preferentially allocate the spectrum band *M* in a first state of the same service type to the newly added service; and
if a link comprising a continuous available spectrum resource exists in the spectrum band *M* in a first state in the pre-classified spectrum resource, allocate a spectrum resource in the spectrum band *M* in a first state to the newly added service.

3. The spectrum allocation device according to claim 2, wherein the allocation unit (11) is specifically further configured to:
if a continuous available resource whose service type is the same as the service type i of the newly added service does not exist in the spectrum band *M* in a first state in the pre-classified spectrum resource, check whether a continuous available spectrum resource exists in the spectrum band *M'* in a second state in the pre-classified spectrum resource; and
if a continuous available spectrum resource whose service type is the same as the service type i of the newly added service exists in the spectrum band *M'* in a second state, allocate a spectrum resource to the newly added service.

4. The spectrum allocation device according to claim 3, wherein the allocation unit (11) is specifically further configured to:
if a continuous available spectrum resource whose service type is the same as the service type i of the newly added service does not exist in the spectrum band *M'* in a second state, check whether a continuous available spectrum resource exists in the spectrum band *N* in a third state in the pre-classified spectrum resource; and
if a continuous available spectrum resource whose service type is the same as the service type i of the newly added service exists in the spectrum band *N* in a third state, allocate a spectrum resource to the newly added service.

5. The spectrum allocation device according to claim 1, wherein the allocation unit (11) is specifically further configured to:
when the newly added service is received, preferentially allocate a continuous available spectrum resource to the newly added service according to the spectrum band *M'* in a second state in the pre-classified spectrum resource; and
when the spectrum band *M'* in a second state cannot meet the newly added service, search, according to the pre-classified spectrum resource, the spectrum band *M* in a first state and/or the spectrum band *N* in a third state for a continuous available spectrum resource, and allocate the continuous available spectrum resource to the newly added service.

6. The spectrum allocation device according to claim 1, wherein the update unit (12) is specifically configured to:
update a current state of the spectrum band *M* in a first state after the newly added service is released in the pre-classified spectrum resource, and update a state of the spectrum band *M'* in a second state according to a spectrum resource obtained after the newly added service is released.

7. The spectrum allocation device according to claim 6, wherein the update unit (12) is specifically further configured to:
when a service on the spectrum band *M'* in a second state releases all spectrum resources, update, to the spectrum band *N* in a third state, the spectrum resources released in the spectrum band *M'* in a second state;
or
when a service on the spectrum band *M'* in a second state releases all spectrum resources, keep a state of the spectrum band *N* in a third state unchanged.

8. A spectrum allocation method, comprising:
allocating (301, 401) a corresponding continuous available spectrum resource to a newly added service of service type i of k possible service types, each possible service type occupying a predefined spectrum width s(i), 1≤i≤k, according to a pre-classified spectrum resource, wherein the pre-classified spectrum resource comprises: a spectrum band *M* in a first state, a spectrum band *M'* in a second state, and a spectrum band *N* in a third state, wherein the spectrum band *M* in a first state is a spectrum band in an occupied state, and at least one link in the spectrum band in an occupied state is in an occupied state, the spectrum band *M'* in a second state is a spectrum band in a released state, wherein the spectrum band in a released state is a spectrum band comprising spectrum resources that are released by all services in the spectrum band *M* in a first state, and the spectrum band *N* in a third state is a spectrum band *N* in an unused state, and wherein, if a continuous available spectrum resource having a bandwidth corresponding to the predefined bandwidth of the newly added service of type i exists in the spectrum band *M* in the first state or in the spectrum band *M'* in the second state, a continuous available spectrum resource according to the spectrum band *M* in the first state or according to the spectrum band *M'* in a second state in the pre-classified spectrum resource is allocated to the newly added service; and
updating (302, 407, 503) status information of the spectrum resource occupied by the newly added service.

9. The method according to claim 8 wherein the allocating (301, 401) a corresponding continuous available spectrum resource to a newly added service of service type i of k possible service types according to a pre-classified spectrum resource comprises:
when the spectrum resource is allocated to the newly added service, if the service type i of the newly added service is the same as a service type of the spectrum band *M* in a first state, preferentially allocating the spectrum band *M* in a first state of the same service type to the newly added service; and
if a link comprising a continuous available spectrum resource exists in the spectrum band *M* in a first state in the pre-classified spectrum resource, allocating (402) a spectrum resource in the spectrum band *M* in a first state to the newly added service.

10. The method according to claim 9, wherein the allocating (301, 401) a corresponding continuous available spectrum resource to a newly added service of service type i of k possible service types according to a pre-classified spectrum resource further comprises:
if a continuous available resource whose service type is the same as the service type i of the newly added service does not exist in the spectrum band *M* in a first state in the pre-classified spectrum resource, checking (403) whether a continuous available spectrum resource exists in the spectrum band *M'* in a second state in the pre-classified spectrum resource; and
if a continuous available spectrum resource whose service type is the same as the service type i of the newly added service exists in the spectrum band *M'* in a second state, allocating (404) a spectrum resource to the newly added service.

11. The method according to claim 10, wherein the allocating (301, 401) a corresponding continuous available spectrum resource to a newly added service of service type i of k possible service types according to a pre-classified spectrum resource further comprises:
if a continuous available spectrum resource whose service type is the same as the service type i of the newly added service does not exist in the spectrum band *M'* in a second state, checking (405) whether a continuous available spectrum resource exists in the spectrum band *N* in a third state in the pre-classified spectrum resource; and
if a continuous available spectrum resource whose service type is the same as the service type i of the newly added service exists in the spectrum band *N* in a third state, allocating (406) a spectrum resource to the newly added service.

12. The method according to claim 8, wherein the allocating (301, 401) a corresponding continuous available spectrum resource to a newly added service according to a pre-classified spectrum resource comprises:
when the newly added service is received, preferentially allocating (501) a continuous available spectrum resource to the newly added service according to the spectrum band *M'* in a second state in the pre-classified spectrum resource; and
when the spectrum band *M'* in a second state cannot meet the newly added service, searching, according to the pre-classified spectrum resource, the spectrum band *M* in a first state and/or the spectrum band *N* in a third state for a continuous available spectrum resource, and allocating (502) the continuous available spectrum resource to the newly added service.

13. The method according to claim 8, wherein the updating (302, 407, 503) status information of the spectrum resource occupied by the newly added service comprises:
updating a current state of the spectrum band *M* in a first state after the newly added service is released in the pre-classified spectrum resource, and updating a state of the spectrum band *M'* in a second state according to a spectrum resource obtained after the newly added service is released.

14. The method according to claim 13, wherein the updating (302, 407, 503) a current state of the spectrum band *M* in a first state after the newly added service is released in the pre-classified spectrum resource, and updating a state of the spectrum band *M'* in a second state according to a spectrum resource obtained after the newly added service is released comprises:
when a service on the spectrum band *M'* in a second state releases all spectrum resources, updating, to the spectrum band *N* in a third state, the spectrum resources released in the spectrum band *M'* in a second state;
or
when a service on the spectrum band *M'* in a second state releases all spectrum resources, keeping a state of the spectrum band *N* in a third state unchanged.

## Patentansprüche

1. Spektrumzuteilungsvorrichtung (1), umfassend:
eine Zuteilungseinheit (11), die konfiguriert ist zum Zuteilen einer entsprechenden kontinuierlich verfügbaren Spektrumressource zu einem neu hinzugefügten Dienst einer Dienstart i von k möglichen Dienstarten, wobei jede mögliche Dienstart eine vordefinierte Spektrumbreite s(i), 1≤i≤k, besetzt, gemäß einer vorklassifizierten Spektrumressource, wobei die vorklassifizierte Spektrumressource Folgendes umfasst: ein Spektrumband *M* in einem ersten Zustand, ein Spektrumband *M'* in einem zweiten Zustand und ein Spektrumband *N* in einem dritten Zustand, wobei das Spektrumband *M* in einem ersten Zustand ein Spektrumband in einem besetzten Zustand ist und sich mindestens eine Verbindung im Spektrumband in einem besetzten Zustand in einem besetzten Zustand befindet, das Spektrumband *M'* in einem zweiten Zustand ein Spektrumband in einem freigegebenen Zustand ist, wobei das Spektrumband in einem freigegebenen Zustand ein Spektrumband ist, das Spektrumressourcen umfasst, die durch alle Dienste im Spektrumband *M* in einem ersten Zustand freigegeben werden, und das Spektrumband *N* in einem dritten Zustand ein Spektrumband *N* in einem ungenutzten Zustand ist und wobei, falls eine kontinuierlich verfügbare Spektrumressource mit einer Bandbreite, die der vordefinierten Bandbreite des neu hinzugefügten Dienstes der Art i entspricht, im Spektrumband *M* im ersten Zustand oder im Spektrumband *M'* im zweiten Zustand vorhanden ist, die Zuteilungseinheit (11) konfiguriert ist zum Zuteilen einer kontinuierlich verfügbaren Spektrumressource zum neu hinzugefügten Dienst gemäß dem Spektrumband *M* im ersten Zustand bzw. gemäß dem Spektrumband *M'* in einem zweiten Zustand in der vorklassifizierten Spektrumressource; und
eine Aktualisierungseinheit (12), die konfiguriert ist zum Aktualisieren von Statusinformationen der Spektrumressource, die durch den neu hinzugefügten Dienst besetzt ist und durch die Zuteilungseinheit (11) zugeteilt wird.

2. Spektrumzuteilungsvorrichtung nach Anspruch 1, wobei die Zuteilungseinheit (11) spezifisch konfiguriert ist zum:
wenn die Spektrumressource dem neu hinzugefügten Dienst zugeteilt wird, falls die Dienstart i des neu hinzugefügten Dienstes die gleiche ist wie eine Dienstart des Spektrumbandes *M* in einem ersten Zustand, bevorzugten Zuteilen des Spektrumbandes *M* in einem ersten Zustand der gleichen Dienstart zum neu hinzugefügten Dienst; und,
falls eine Verbindung, die eine kontinuierlich verfügbare Spektrumressource umfasst, im Spektrumband *M* in einem ersten Zustand in der vorklassifizierten Spektrumressource vorhanden ist, Zuteilen einer Spektrumressource im Spektrumband *M* in einem ersten Zustand zum neu hinzugefügten Dienst.

3. Spektrumzuteilungsvorrichtung nach Anspruch 2, wobei die Zuteilungseinheit (11) spezifisch ferner konfiguriert ist zum:
falls eine kontinuierlich verfügbare Ressource, deren Dienstart die gleiche ist wie die Dienstart i des neu hinzugefügten Dienstes, nicht im Spektrumband *M* in einem ersten Zustand in der vorklassifizierten Spektrumressource vorhanden ist, Überprüfen, ob eine kontinuierlich verfügbare Spektrumressource im Spektrumband *M'* in einem zweiten Zustand in der vorklassifizierten Spektrumressource vorhanden ist; und,
falls eine kontinuierlich verfügbare Spektrumressource, deren Dienstart die gleiche ist wie die Dienstart i des neu hinzugefügten Dienstes, im Spektrumband *M'* in einem zweiten Zustand vorhanden ist, Zuteilen einer Spektrumressource zum neu hinzugefügten Dienst.

4. Spektrumzuteilungsvorrichtung nach Anspruch 3, wobei die Zuteilungseinheit (11) spezifisch ferner konfiguriert ist zum:
falls eine kontinuierlich verfügbare Spektrumressource, deren Dienstart die gleiche ist wie die Dienstart i des neu hinzugefügten Dienstes, nicht im Spektrumband *M'* in einem zweiten Zustand vorhanden ist, Überprüfen, ob eine kontinuierlich verfügbare Spektrumressource im Spektrumband *N* in einem dritten Zustand in der vorklassifizierten Spektrumressource vorhanden ist; und,
falls eine kontinuierlich verfügbare Spektrumressource, deren Dienstart die gleiche ist wie die Dienstart i des neu hinzugefügten Dienstes, im Spektrumband *N* in einem dritten Zustand vorhanden ist, Zuteilen einer Spektrumressource zum neu hinzugefügten Dienst.

5. Spektrumzuteilungsvorrichtung nach Anspruch 1, wobei die Zuteilungseinheit (11) spezifisch ferner konfiguriert ist zum:
wenn der neu hinzugefügte Dienst empfangen wird, bevorzugtes Zuteilen einer kontinuierlich verfügbaren Spektrumressource zum neu hinzugefügten Dienst gemäß dem Spektrumband *M'* in einem zweiten Zustand in der vorklassifizierten Spektrumressource; und,
wenn das Spektrumband *M'* in einem zweiten Zustand den neu hinzugefügten Dienst nicht erfüllen kann, Durchsuchen, gemäß der vorklassifizierten Spektrumressource, des Spektrumbandes *M* in einem ersten Zustand und/oder des Spektrumbandes *N* in einem dritten Zustand nach einer kontinuierlich verfügbaren Spektrumressource und Zuteilen der kontinuierlich verfügbaren Spektrumressource zum neu hinzugefügten Dienst.

6. Spektrumzuteilungsvorrichtung nach Anspruch 1, wobei die Aktualisierungseinheit (12) spezifisch konfiguriert ist zum:
Aktualisieren eines gegenwärtigen Zustands des Spektrumbandes *M* in einem ersten Zustand, nachdem der neu hinzugefügte Dienst in der vorklassifizierten Spektrumressource freigegeben wird, und Aktualisieren eines Zustands des Spektrumbandes *M'* in einem zweiten Zustand gemäß einer Spektrumressource, die erhalten wird, nachdem der neu hinzugefügte Dienst freigegeben wird.

7. Spektrumzuteilungsvorrichtung nach Anspruch 6, wobei die Aktualisierungseinheit (12) spezifisch ferner konfiguriert ist zum:
wenn ein Dienst auf dem Spektrumband *M'* in einem zweiten Zustand alle Spektrumressourcen freigibt, Aktualisieren, zum Spektrumband *N* in einem dritten Zustand, der Spektrumressourcen, die im Spektrumband *M'* in einem zweiten Zustand freigegeben werden;
oder,
wenn ein Dienst auf dem Spektrumband *M'* in einem zweiten Zustand alle Spektrumressourcen freigibt, Unverändertlassen eines Zustands des Spektrumbandes *N* in einem dritten Zustand.

8. Spektrumzuteilungsverfahren, umfassend:
Zuteilen (301, 401) einer entsprechenden kontinuierlich verfügbaren Spektrumressource zu einem neu hinzugefügten Dienst einer Dienstart i von k möglichen Dienstarten, wobei jede mögliche Dienstart eine vordefinierte Spektrumbreite s(i), 1≤i≤k, besetzt, gemäß einer vorklassifizierten Spektrumressource, wobei die vorklassifizierte Spektrumressource Folgendes umfasst: ein Spektrumband *M* in einem ersten Zustand, ein Spektrumband *M'* in einem zweiten Zustand und ein Spektrumband *N* in einem dritten Zustand, wobei das Spektrumband *M* in einem ersten Zustand ein Spektrumband in einem besetzten Zustand ist und sich mindestens eine Verbindung im Spektrumband in einem besetzten Zustand in einem besetzten Zustand befindet, das Spektrumband *M'* in einem zweiten Zustand ein Spektrumband in einem freigegebenen Zustand ist, wobei das Spektrumband in einem freigegebenen Zustand ein Spektrumband ist, das Spektrumressourcen umfasst, die durch alle Dienste im Spektrumband *M* in einem ersten Zustand freigegeben werden, und das Spektrumband *N* in einem dritten Zustand ein Spektrumband *N* in einem ungenutzten Zustand ist und wobei, falls eine kontinuierlich verfügbare Spektrumressource mit einer Bandbreite, die der vordefinierten Bandbreite des neu hinzugefügten Dienstes der Art i entspricht, im Spektrumband *M* im ersten Zustand oder im Spektrumband *M'* im zweiten Zustand vorhanden ist, eine kontinuierlich verfügbare Spektrumressource gemäß dem Spektrumband *M* im ersten Zustand oder gemäß dem Spektrumband *M'* in einem zweiten Zustand in der vorklassifizierten Spektrumressource zum neu hinzugefügten Dienst zugeteilt wird; und
Aktualisieren (302, 407, 503) von Statusinformationen der Spektrumressource, die durch den neu hinzugefügten Dienst besetzt ist.

9. Verfahren nach Anspruch 8, wobei das Zuteilen (301, 401) einer entsprechenden kontinuierlich verfügbaren Spektrumressource zu einem neu hinzugefügten Dienst einer Dienstart i von k möglichen Dienstarten gemäß einer vorklassifizierten Spektrumressource Folgendes umfasst:
wenn die Spektrumressource dem neu hinzugefügten Dienst zugeteilt wird, falls die Dienstart i des neu hinzugefügten Dienstes die gleiche ist wie eine Dienstart des Spektrumbandes *M* in einem ersten Zustand, bevorzugtes Zuteilen des Spektrumbandes *M* in einem ersten Zustand der gleichen Dienstart zum neu hinzugefügten Dienst; und,
falls eine Verbindung, die eine kontinuierlich verfügbare Spektrumressource umfasst, im Spektrumband *M* in einem ersten Zustand in der vorklassifizierten Spektrumressource vorhanden ist, Zuteilen (402) einer Spektrumressource im Spektrumband *M* in einem ersten Zustand zum neu hinzugefügten Dienst.

10. Verfahren nach Anspruch 9, wobei das Zuteilen (301, 401) einer entsprechenden kontinuierlich verfügbaren Spektrumressource zu einem neu hinzugefügten Dienst einer Dienstart i von k möglichen Dienstarten gemäß einer vorklassifizierten Spektrumressource ferner Folgendes umfasst:
falls eine kontinuierlich verfügbare Ressource, deren Dienstart die gleiche ist wie die Dienstart i des neu hinzugefügten Dienstes, nicht im Spektrumband *M* in einem ersten Zustand in der vorklassifizierten Spektrumressource vorhanden ist, Überprüfen (403), ob eine kontinuierlich verfügbare Spektrumressource im Spektrumband *M'* in einem zweiten Zustand in der vorklassifizierten Spektrumressource vorhanden ist; und,
falls eine kontinuierlich verfügbare Spektrumressource, deren Dienstart die gleiche ist wie die Dienstart i des neu hinzugefügten Dienstes, im Spektrumband *M'* in einem zweiten Zustand vorhanden ist, Zuteilen (404) einer Spektrumressource zum neu hinzugefügten Dienst.

11. Verfahren nach Anspruch 10, wobei das Zuteilen (301, 401) einer entsprechenden kontinuierlich verfügbaren Spektrumressource zu einem neu hinzugefügten Dienst einer Dienstart i von k möglichen Dienstarten gemäß einer vorklassifizierten Spektrumressource ferner Folgendes umfasst:
falls eine kontinuierlich verfügbare Spektrumressource, deren Dienstart die gleiche ist wie die Dienstart i des neu hinzugefügten Dienstes, nicht im Spektrumband *M'* in einem zweiten Zustand vorhanden ist, Überprüfen (405), ob eine kontinuierlich verfügbare Spektrumressource im Spektrumband *N* in einem dritten Zustand in der vorklassifizierten Spektrumressource vorhanden ist; und,
falls eine kontinuierlich verfügbare Spektrumressource, deren Dienstart die gleiche ist wie die Dienstart i des neu hinzugefügten Dienstes, im Spektrumband *N* in einem dritten Zustand vorhanden ist, Zuteilen (406) einer Spektrumressource zum neu hinzugefügten Dienst.

12. Verfahren nach Anspruch 8, wobei das Zuteilen (301, 401) einer entsprechenden kontinuierlich verfügbaren Spektrumressource zu einem neu hinzugefügten Dienst gemäß einer vorklassifizierten Spektrumressource Folgendes umfasst:
wenn der neu hinzugefügte Dienst empfangen wird, bevorzugtes Zuteilen (501) einer kontinuierlich verfügbaren Spektrumressource zum neu hinzugefügten Dienst gemäß dem Spektrumband *M'* in einem zweiten Zustand in der vorklassifizierten Spektrumressource; und,
wenn das Spektrumband *M'* in einem zweiten Zustand den neu hinzugefügten Dienst nicht erfüllen kann, Durchsuchen, gemäß der vorklassifizierten Spektrumressource, des Spektrumbandes *M* in einem ersten Zustand und/oder des Spektrumbandes *N* in einem dritten Zustand nach einer kontinuierlich verfügbaren Spektrumressource und Zuteilen (502) der kontinuierlich verfügbaren Spektrumressource zum neu hinzugefügten Dienst.

13. Verfahren nach Anspruch 8, wobei das Aktualisieren (302, 407, 503) von Statusinformationen der Spektrumressource, die durch den neu hinzugefügten Dienst besetzt ist, Folgendes umfasst:
Aktualisieren eines gegenwärtigen Zustands des Spektrumbandes *M* in einem ersten Zustand, nachdem der neu hinzugefügte Dienst in der vorklassifizierten Spektrumressource freigegeben wird, und Aktualisieren eines Zustands des Spektrumbandes *M'* in einem zweiten Zustand gemäß einer Spektrumressource, die erhalten wird, nachdem der neu hinzugefügte Dienst freigegeben wird.

14. Verfahren nach Anspruch 13, wobei das Aktualisieren (302, 407, 503) eines gegenwärtigen Zustands des Spektrumbandes *M* in einem ersten Zustand, nachdem der neu hinzugefügte Dienst in der vorklassifizierten Spektrumressource freigegeben wird, und das Aktualisieren eines Zustands des Spektrumbandes *M'* in einem zweiten Zustand gemäß einer Spektrumressource, die erhalten wird, nachdem der neu hinzugefügte Dienst freigegeben wird, Folgendes umfasst:
wenn ein Dienst auf dem Spektrumband *M'* in einem zweiten Zustand alle Spektrumressourcen freigibt, Aktualisieren, zum Spektrumband *N* in einem dritten Zustand, der Spektrumressourcen, die im Spektrumband *M'* in einem zweiten Zustand freigegeben werden;
oder,
wenn ein Dienst auf dem Spektrumband *M'* in einem zweiten Zustand alle Spektrumressourcen freigibt, Unverändertlassen eines Zustands des Spektrumbandes *N* in einem dritten Zustand.

## Revendications

1. Dispositif (1) d'attribution de spectre, comportant :
une unité (11) d'attribution, configurée pour attribuer une ressource de spectre disponible continue correspondante à un service nouvellement ajouté de type de service i parmi k types de services possibles, chaque type de service possible occupant une largeur de spectre prédéfinie s(i), 1≤i≤k, d'après une ressource de spectre pré-classifiée, la ressource de spectre pré-classifiée comportant : une bande de spectre M dans un premier état, une bande de spectre M' dans un deuxième état, et une bande de spectre N dans un troisième état, la bande de spectre M dans un premier état étant une bande de spectre dans un état occupé, et au moins une liaison dans la bande de spectre dans un état occupé étant dans un état occupé, la bande de spectre M' dans un deuxième état étant une bande de spectre dans un état libéré, la bande de spectre dans un état libéré étant une bande de spectre comportant des ressources de spectre qui sont libérées par tous les services dans la bande de spectre M dans un premier état, et la bande de spectre N dans un troisième état est une bande de spectre N dans un état inutilisé, et, si une ressource de spectre disponible continue présentant une bande passante correspondant à la bande passante prédéfinie du service nouvellement ajouté de type i existe dans la bande de spectre M dans le premier état ou dans la bande de spectre M' dans le deuxième état, l'unité (11) d'attribution étant configurée pour attribuer une ressource de spectre disponible continue au service nouvellement ajouté d'après la bande de spectre M dans le premier état ou d'après la bande de spectre M' dans un deuxième état dans la ressource de spectre pré-classifiée, respectivement ; et
une unité (12) de mise à jour, configurée pour mettre à jour des informations d'état de la ressource de spectre qui est occupée par le service nouvellement ajouté et qui est attribuée par l'unité (11) d'attribution.

2. Dispositif d'attribution de spectre selon la revendication 1, l'unité (11) d'attribution étant spécifiquement configurée pour :
lorsque la ressource de spectre est attribuée au service nouvellement ajouté, si le type de service i du service nouvellement ajouté est le même qu'un type de service de la bande de spectre M dans un premier état, attribuer préférentiellement la bande de spectre M dans un premier état du même type de service au service nouvellement ajouté ; et
si une liaison comportant une ressource de spectre disponible continue existe dans la bande de spectre M dans un premier état dans la ressource de spectre pré-classifiée, attribuer une ressource de spectre dans la bande de spectre M dans un premier état au service nouvellement ajouté.

3. Dispositif d'attribution de spectre selon la revendication 2, l'unité (11) d'attribution étant en outre spécifiquement configurée pour :
si une ressource disponible continue dont le type de service est le même que le type de service i du service nouvellement ajouté n'existe pas dans la bande de spectre M dans un premier état dans la ressource de spectre pré-classifiée, vérifier si une ressource de spectre disponible continue existe dans la bande de spectre M' dans un deuxième état dans la ressource de spectre pré-classifiée ; et
si une ressource de spectre disponible continue dont le type de service est le même que le type de service i du service nouvellement ajouté existe dans la bande de spectre M' dans un deuxième état, attribuer une ressource de spectre au service nouvellement ajouté.

4. Dispositif d'attribution de spectre selon la revendication 3, l'unité (11) d'attribution étant en outre spécifiquement configurée pour :
si une ressource de spectre disponible continue dont le type de service est le même que le type de service i du service nouvellement ajouté n'existe pas dans la bande de spectre M' dans un deuxième état, vérifier si une ressource de spectre disponible continue existe dans la bande de spectre N dans un troisième état dans la ressource de spectre pré-classifiée ; et
si une ressource de spectre disponible continue dont le type de service est le même que le type de service i du service nouvellement ajouté existe dans la bande de spectre N dans un troisième état, attribuer une ressource de spectre au service nouvellement ajouté.

5. Dispositif d'attribution de spectre selon la revendication 1, l'unité (11) d'attribution étant en outre spécifiquement configurée pour :
lorsque le service nouvellement ajouté est reçu, attribuer préférentiellement une ressource de spectre disponible continue au service nouvellement ajouté d'après la bande de spectre M' dans un deuxième état dans la ressource de spectre pré-classifiée ; et
lorsque la bande de spectre M' dans un deuxième état ne peut pas satisfaire le service nouvellement ajouté, explorer, d'après la ressource de spectre pré-classifiée, la bande de spectre M dans un premier état et/ou la bande de spectre N dans un troisième état à la recherche d'une ressource de spectre disponible continue, et attribuer la ressource de spectre disponible continue au service nouvellement ajouté.

6. Dispositif d'attribution de spectre selon la revendication 1, l'unité (12) de mise à jour étant spécifiquement configurée pour :
mettre à jour un état actuel de la bande de spectre M dans un premier état après que le service nouvellement ajouté a été libéré dans la ressource de spectre pré-classifiée, et mettre à jour un état de la bande de spectre M' dans un deuxième état d'après une ressource de spectre obtenue après que le service nouvellement ajouté a été libéré.

7. Dispositif d'attribution de spectre selon la revendication 6, l'unité (12) de mise à jour étant en outre spécifiquement configurée pour :
lorsqu'un service sur la bande de spectre M' dans un deuxième état libère toutes les ressources de spectre, mettre à jour, vers la bande de spectre N dans un troisième état, les ressources de spectre libérées dans la bande de spectre M' dans un deuxième état ; ou
lorsqu'un service sur la bande de spectre M' dans un deuxième état libère toutes les ressources de spectre, maintenir inchangé un état de la bande de spectre N dans un troisième état.

8. Procédé d'attribution de spectre, comportant les étapes consistant à :
attribuer (301, 401) une ressource de spectre disponible continue correspondante à un service nouvellement ajouté de type de service i parmi k types de services possibles, chaque type de service possible occupant une largeur de spectre prédéfinie s(i), 1≤i≤k, d'après une ressource de spectre pré-classifiée, la ressource de spectre pré-classifiée comportant : une bande de spectre M dans un premier état, une bande de spectre M' dans un deuxième état, et une bande de spectre N dans un troisième état, la bande de spectre M dans un premier état étant une bande de spectre dans un état occupé, et au moins une liaison dans la bande de spectre dans un état occupé est dans un état occupé, la bande de spectre M' dans un deuxième état est une bande de spectre dans un état libéré, la bande de spectre dans un état libéré étant une bande de spectre comportant des ressources de spectre qui sont libérées par tous les services dans la bande de spectre M dans un premier état, et la bande de spectre N dans un troisième état est une bande de spectre N dans un état inutilisé, et, si une ressource de spectre disponible continue présentant une bande passante correspondant à la bande passante prédéfinie du service nouvellement ajouté de type i existe dans la bande de spectre M dans le premier état ou dans la bande de spectre M' dans le deuxième état, une ressource de spectre disponible continue d'après la bande de spectre M dans le premier état ou d'après la bande de spectre M' dans un deuxième état dans la ressource de spectre pré-classifiée étant attribuée au service nouvellement ajouté ; et
mettre à jour (302, 407, 503) des informations d'état de la ressource de spectre occupée par le service nouvellement ajouté.

9. Procédé selon la revendication 8, l'attribution (301, 401) d'une ressource de spectre disponible continue correspondante à un service nouvellement ajouté de type de service i parmi k types de services possibles d'après une ressource de spectre pré-classifiée comportant les étapes consistant :
lorsque la ressource de spectre est attribuée au service nouvellement ajouté, si le type de service i du service nouvellement ajouté est le même qu'un type de service de la bande de spectre M dans un premier état, à attribuer préférentiellement la bande de spectre M dans un premier état du même type de service au service nouvellement ajouté ; et
si une liaison comportant une ressource de spectre disponible continue existe dans la bande de spectre M dans un premier état dans la ressource de spectre pré-classifiée, à attribuer (402) une ressource de spectre dans la bande de spectre M dans un premier état au service nouvellement ajouté.

10. Procédé selon la revendication 9, l'attribution (301, 401) d'une ressource de spectre disponible continue correspondante à un service nouvellement ajouté de type de service i parmi k types de services possibles d'après une ressource de spectre pré-classifiée comportant en outre les étapes consistant :
si une ressource disponible continue dont le type de service est le même que le type de service i du service nouvellement ajouté n'existe pas dans la bande de spectre M dans un premier état dans la ressource de spectre pré-classifiée, à vérifier (403) si une ressource de spectre disponible continue existe dans la bande de spectre M' dans un deuxième état dans la ressource de spectre pré-classifiée ; et
si une ressource de spectre disponible continue dont le type de service est le même que le type de service i du service nouvellement ajouté existe dans la bande de spectre M' dans un deuxième état, à attribuer (404) une ressource de spectre au service nouvellement ajouté.

11. Procédé selon la revendication 10, l'attribution (301, 401) d'une ressource de spectre disponible continue correspondante à un service nouvellement ajouté de type de service i parmi k types de services possibles d'après une ressource de spectre pré-classifiée comportant en outre les étapes consistant :
si une ressource de spectre disponible continue dont le type de service est le même que le type de service i du service nouvellement ajouté n'existe pas dans la bande de spectre M' dans un deuxième état, à vérifier (405) si une ressource de spectre disponible continue existe dans la bande de spectre N dans un troisième état dans la ressource de spectre pré-classifiée ; et
si une ressource de spectre disponible continue dont le type de service est le même que le type de service i du service nouvellement ajouté existe dans la bande de spectre N dans un troisième état, à attribuer (406) une ressource de spectre au service nouvellement ajouté.

12. Procédé selon la revendication 8, l'attribution (301, 401) d'une ressource de spectre disponible continue correspondante à un service nouvellement ajouté d'après une ressource de spectre pré-classifiée comportant les étapes consistant :
lorsque le service nouvellement ajouté est reçu, à attribuer préférentiellement (501) une ressource de spectre disponible continue au service nouvellement ajouté d'après la bande de spectre M' dans un deuxième état dans la ressource de spectre pré-classifiée ; et
lorsque la bande de spectre M' dans un deuxième état ne peut pas satisfaire le service nouvellement ajouté, à explorer, d'après la ressource de spectre pré-classifiée, la bande de spectre M dans un premier état et/ou la bande de spectre N dans un troisième état à la recherche d'une ressource de spectre disponible continue, et à attribuer (502) la ressource de spectre disponible continue au service nouvellement ajouté.

13. Procédé selon la revendication 8, la mise à jour (302, 407, 503) d'informations d'état de la ressource de spectre occupée par le service nouvellement ajouté comportant les étapes consistant à :
mettre à jour un état actuel de la bande de spectre M dans un premier état après que le service nouvellement ajouté a été libéré dans la ressource de spectre pré-classifiée, et mettre à jour un état de la bande de spectre M' dans un deuxième état d'après une ressource de spectre obtenue après que le service nouvellement ajouté a été libéré.

14. Procédé selon la revendication 13, la mise à jour (302, 407, 503) d'un état actuel de la bande de spectre M dans un premier état après que le service nouvellement ajouté a été libéré dans la ressource de spectre pré-classifiée, et la mise à jour d'un état de la bande de spectre M' dans un deuxième état d'après une ressource de spectre obtenue après que le service nouvellement ajouté a été libéré comportant les étapes consistant :
lorsqu'un service sur la bande de spectre M' dans un deuxième état libère toutes les ressources de spectre, à mettre à jour, vers la bande de spectre N dans un troisième état, les ressources de spectre libérées dans la bande de spectre M' dans un deuxième état ;
ou lorsqu'un service sur la bande de spectre M' dans un deuxième état libère toutes les ressources de spectre, maintenir inchangé un état de la bande de spectre N dans un troisième état.
